(19) Europäisches Patentamt
European Patent Office
Office européen des brevets

(11) **EP 1 973 055 B1**

(12) **EUROPÄISCHE PATENTSCHRIFT**

(45) Veröffentlichungstag und Bekanntmachung des Hinweises auf die Patenterteilung:
**24.06.2009 Patentblatt 2009/26**

(51) Int Cl.:
***G06K 7/00*** *(2006.01)*     ***G06K 19/077*** *(2006.01)*

(21) Anmeldenummer: **07005627.0**

(22) Anmeldetag: **19.03.2007**

(54) **Lese-Einheit und Verfahren zur energiearmen Detektion eines Transponders**

Read unit and method for low energy detection of a transponder

Unité de lecture et méthode pour détection à faible énergie d'un transpondeur

(84) Benannte Vertragsstaaten:
**AT BE BG CH CY CZ DE DK EE ES FI FR GB GR HU IE IS IT LI LT LU LV MC MT NL PL PT RO SE SI SK TR**

(43) Veröffentlichungstag der Anmeldung:
**24.09.2008 Patentblatt 2008/39**

(60) Teilanmeldung:
**08019623.1 / 2 026 243**

(73) Patentinhaber: **SimonsVoss Technologies AG
85774 Unterföhring (DE)**

(72) Erfinder:
• **Do, Tien-Toan Dr
80933 München (DE)**
• **Voss, Ludger Dr
80675 München (DE)**

(74) Vertreter: **Jordan, Volker Otto Wilhelm et al
Weickmann & Weickmann
Patentanwälte
Postfach 860 820
81635 München (DE)**

(56) Entgegenhaltungen:

| | |
|---|---|
| **EP-A- 0 933 733** | **EP-A1- 1 356 957** |
| **EP-A2- 0 944 014** | **WO-A1-99/48071** |
| **DE-A1- 2 630 683 39** | **DE-A1-6102004 052** |
| **US-A- 3 859 624** | **US-A- 4 063 230** |
| **US-A- 5 602 734** | **US-A- 5 815 557** |
| **US-A- 6 035 677** | **US-A- 6 150 948** |

## Beschreibung

Nach einem ersten Aspekt betrifft die Erfindung eine Lese-Einheit, etwa RFID- oder NFC-Lese-Einheit, umfassend: wenigstens eine Luftschnittstelle, die dafür ausgeführt ist, in wenigstens einem Kopplungs-Betriebszustand der Lese-Einheit wenigstens eines von einem elektrischen Wechselfeld und einem magnetischen Wechselfeld und einem elektromagnetischen Strahlungs-Wechselfeld zu erzeugen, um induktiv oder/und kapazitiv oder/und elektromagnetisch an einen in einem Zuordnungsbereich befindlichen Transponder, ggf. RFID- oder NFC-Transponder, koppeln zu können; eine Steuereinrichtung, die dafür ausgeführt oder programmiert ist, in dem Kopplungs-Betriebszustand mittels der Luftschnittstelle auf einen angekoppelten Transponder anzusprechen, zur Durchführung einer Datenkommunikation umfassend zumindest eines von einem Auslesen wenigstens eines Datenwerts aus dem Transponder und einem Empfangen wenigstens eines vom Transponder gesendeten Datenwerts und einem Senden wenigstens eines Datenwerts an den Transponder, oder/und zumindest im Sinne eines Erfassens des Vorhandenseins des angekoppelten Transponders; und eine die Steuereinrichtung und die Luftschnittstelle mit elektrischer Betriebsenergie versorgende elektrische Energieversorgung.

Herkömmliche Lese-Einheiten der angesprochenen Art, beispielsweise RFID-(Radio Frequency Identification)-Leser oder -Kartenleser, bauen ein permanentes elektromagnetisches Nahfeld auf, beispielsweise bei einer Frequenz von 125 kHz oder 13,56 MHz. Passiv-Transponder, beispielsweise als RFID-Karte ausgeführt, die in dieses Nahfeld gebracht werden, speisen sich aus diesem Feld und bauen mit der so gewonnenen Energie eine Kommunikation mit dem Leser auf, z.B. um Identdaten auszutauschen. Die Lese-Einheit identifiziert das Vorhandensein eines Transponders durch den Energieverlust des elektromagnetischen Nahfelds, den sie als Last detektiert. Die Datenübertragung vom Transponder zur Lese-Einheit erfolgt häufig durch sog. Lastmodulation, in der der Transponder den Energieverlust moduliert, was die Lese-Einheit als Modulation der Last detektiert. Es wird auf die einschlägige Fachliteratur zur RFID-Technologie sowie zur NFC-(Near Field Communication)-Technologie verwiesen, sowie auf die einschlägigen Standards. Einen guten Überblick über die RFID-Technologie gibt das Fachbuch "RFID-Handbuch - Grundlagen und praktische Anwendungen induktiver Funkanlagen, Transponder und kontaktloser Chipkarten" von Klaus Finkenzeller, 4. Auflage, Karl Hanser Verlag München - Wien, 2006.

Das sich vor allem als elektrisches Wechselfeld oder magnetisches Wechselfeld oder elektromagnetisches Strahlungs-Wechselfeld darstellende Nahfeld wird deswegen permanent aufrecht erhalten, damit die Lese-Einheit sofort auf einen in den Nahfeldbereich eingebrachten Transponder reagieren kann und nicht etwa noch erst die Lese-Einheit von einem Benutzer eingeschaltet werden muss. Für den permanenten Erhalt dieses Nahfelds wird allerdings relativ viel Energie benötigt, so dass herkömmliche Lese-Einheiten extern mit Energie versorgt werden, was entsprechenden Installationsaufwand mit sich bringt. US-A- 6 150 948 offenbart die Merkmale des Oberbegriffes von Anspruch 1 und 14.

Demgegenüber liegt der Erfindung die Aufgabe zugrunde, den Energieverbrauch einer solchen Lese-Einheit deutlich zu reduzieren, zumindest betreffend Phasen, in denen kein Datenaustausch zwischen der Lese-Einheit und einem Transponder stattfindet, insbesondere um eine Energieversorgung auf Batterie- oder Akkumulatorbasis ohne kabelgebundene Zufuhr von elektrischer Energie bei vergleichsweise langen Batterie- oder Akkumulator Standzeiten zu ermöglichen.

Die Erfindung ist Gegenstand der unabhängigen Ansprüche 1 und 14. Es wird vorgeschlagen, dass in wenigstens einem Ruhe-Betriebszustand der Lese-Einheit zumindest die Luftschnittstelle ausgeschaltet ist, so dass der elektrische Energieverbrauch der Luftschnittstelle zumindest reduziert ist; dass in dem Kopplungs-Betriebszustand der Lese-Einheit die Luftschnittstelle eingeschaltet ist, so dass ein im Zuordnungsbereich befindlicher Transponder induktiv bzw. kapazitiv bzw. elektromagnetisch an diese ankoppeln kann; und dass die Steuereinrichtung dafür ausgeführt ist oder programmiert ist, selbsttätig zwischen mehreren, den Ruhe-Betriebszustand und den Kopplungs-Betriebsstand umfassenden Betriebszuständen umzuschalten.

Dadurch, dass die Luftschnittstelle in dem Ruhe-Betriebszustand ausgeschaltet ist, verbraucht die Luftschnittstelle keine oder zumindest nur in reduziertem Umfang elektrische Energie. Im Ruhe-Betriebszustand können ggf. fast alle Komponenten der Lese-Einheit ausgeschaltet sein mit Ausnahme einer Einrichtung, die selbsttätig wieder aus dem Ruhe-Betriebszustand zurückschaltet. Beispielsweise kann ein entsprechender Watchdog-Timer oder dergleichen vorgesehen sein, der in gewissen zeitlichen Abständen für eine Rückkehr der Lese-Einheit aus dem Ruhe-Betriebszustand etwa in den Kopplungs-Betriebszustand oder einen Überwachungs-Betriebszustand sorgt. Durch Umschalten der Betriebszustände der Lese-Einheit kann die Lese-Einheit trotzdem auf zugeführte Transponder reagieren, diese im Falle von passiven Transpondern mit Energie versorgen und Daten aus diesen auslesen bzw. Daten mit diesen auszutauschen. Der Energieverbrauch der Lese-Einheit wird vor allem durch den Energieverbrauch im Kopplungs-Betriebszustand der Lese-Einheit maßgeblich mitbestimmt, so dass alleine schon dadurch der Bedarf an elektrischer Energie deutlich reduziert ist, wenn die Lese-Einheit nur in zeitlichen Abständen oder periodisch den Kopplungs-Betriebszustand einnimmt. Besonders große Energieersparnis resultiert dann, wenn die Lese-Einheit den Kopplungs-Betriebszustand nur dann einnimmt, wenn tatsächlich ein Transponder im Zuordnungsbereich, ggf. Nahbereich "angeordnet ist".

Es wird in diesem Zusammenhang vor allem an zwei Möglichkeiten gedacht, nämlich, dass die Steuereinrichtung dafür ausgeführt oder programmiert ist, selbsttätig aus dem Ruhe-Betriebszustand direkt in den Kopplungs-.Betriebszustand oder aus dem Ruhe-Betriebszustand über einen gesonderten Überwachungs-Betriebszustand der Lese-Einheit in den Kopplungs-Betriebszustand umzuschalten. Ferner wird daran gedacht, dass die Steuereinrichtung dafür ausgeführt oder programmiert ist, selbsttätig aus dem Kopplungs-Betriebszustand in den Ruhe-Betriebszustand umzuschalten.

Nach einem ersten Ansatz zur Transponder-Detektion wird vorgeschlagen, dass die Steuereinrichtung dafür ausgeführt ist, in zeitlichen Abständen wiederholt aus dem Ruhe-Betriebszustand in den Kopplungs-Betriebszustand oder einen speziellen Überwachungs-Kopplungs-Betriebszustand umzuschalten, um mittels der oder einer Luftschnittstelle zu überprüfen, ob ein Transponder im Zuordnungsbereich vorhanden ist. Es kann also beispielsweise die Stromaufnahme der Lese-Einheit durch eine Art Polling-Verfahren reduziert werden, nach dem die Lese-Einheit zu gewissen Zeiten, vorzugsweise die meiste Zeit, im "Ruhe-Betriebszustand" ist, also in einer Art "Schlafmodus", in dem der Stromverbrauch gering ist, wobei die Lese-Einheit aber in zeitlichen Abständen wiederholt, ggf. periodisch (z.B. ein Mal pro Sekunde) in den Kopplungs-Betriebszustand übergeht, also "aufwacht", um festzustellen, ob sich ein Transponder im Zuordnungsbereich, ggf. dem Nahfeld der Luftschnittstelle, befindet. Hierzu muss das Wechselfeld der Luftschnittstelle vollständig oder nahezu vollständig aufgebaut werden, um anschließend etwa über die Detektion einer Felddämpfung überprüfen zu können, ob in dem Wechselfeld ein Transponder vorhanden ist. Wird kein Transponder erfasst, so geht die Lese-Einheit selbsttätig wieder in den Ruhe-Betriebszustand über.

Insbesondere wird in diesem Zusammenhang vorgeschlagen, dass eine der Steuereinrichtung zugeordnete oder zugehörige, gewünschtenfalls eine eigene Überwachungs-Luftschnittstelle vorsehende Überwachungseinrichtung dafür ausgeführt ist, im Überwachungs-Kopplungsbetriebszustand auf einen Energieverlust des Wechselfelds oder eines von der Überwachungs-Luftschnittstelle erzeugten Überwachungs-Wechselfelds durch den angekoppelten Transponder anzusprechen, um das Vorhandensein eines Transponders in dem Zuordnungsbereich oder in einem Umgebungsbereich, in welchen sich das Überwachungs-Wechselfeld erstreckt, festzustellen. Eine eine eigene Überwachungs-Luftschnittstelle aufweisende Überwachungseinrichtung ist dahingehend vorteilhaft, als dass sich eine gewisse Energieersparnis gegenüber einer ebenfalls möglichen Realisierung der Überwachung auf Grundlage der auch zur Datenkommunikation dienenden Luftschnittsstelle ergibt, da Komponenten ausgeschaltet bleiben können, die nur der Datenkommunikation und weiteren Verarbeitungen dienen.

Weiterbildend wird vorgeschlagen, dass wenigstens eine Felderzeugungsanordnung, ggf. Antennenanordnung, vorgesehen ist, die als Überwachungs-Felderzeugungsanordnung, ggf. Überwachungs-Antennenanordnung, der Überwachungseinrichtung zugeordnet oder zuordenbar ist für die Erzeugung des Überwachungs-Wechselfelds. Wie später noch ausgeführt, kann die Überwachungs-Luftschnittstelle die gleiche Felderzeugungsanordnung wie die der Datenkommunikation dienende Luftschnittsstelle verwenden. In einer funktionellen Betrachtung macht es trotzdem Sinn, in einem solchen Falle die Überwachungs-Luftschnittstelle als gegenüber der der Datenkommunikation dienenden Luftschnittsstelle gesonderte eigene Luftschnittsstelle der Überwachungseinrichtung anzusehen.

Nach dem Polling-Ansatz zur Detektion eines Transponders im Zuordnungsbereich lässt sich der Verbrauch an elektrischer Energie durchaus nennenswert reduzieren, bezogen auf die durchschnittliche Stromaufnahme beispielsweise um 2 bis 3 Größenordnungen gegenüber einer herkömmlichen, nicht-pollendem RFID-Lese-Einheit. Es kommt für eine derartig ausgeführte Lese-Einheit durchaus eine Energieversorgung auf Batteriebasis in Betracht, wobei allerdings in einer praktischen Betrachtung Batteriewechsel in gewissen Abständen, beispielsweise im Jahresrhytmus, eine gewisse Rolle spielen werden, die für manche Anwendungen als wenig akzeptabel erscheinen werden.

Demgegenüber ist es bevorzugt, dass die Lese-Einheit eine von der Luftschnittsstelle vorzugsweise unabhängige, der Steuereinrichtung zugeordnete oder zugehörige Überwachungseinrichtung aufweist, die dafür ausgeführt ist, auf wenigstens eine Änderung in einem Umgebungsbereich der Lese-Einheit oder wenigstens eine Rückwirkung aus dem Umgebungsbereich anzusprechen, wobei die Steuereinrichtung dafür ausgeführt oder programmiert ist, auf ein Ansprechen der Überwachungseinrichtung auf die Änderung bzw. Rückwirkung mit einer Umschaltung in den Kopplungs-Betriebszustand zu reagieren, um mittels der oder einer Luftschnittstelle zu überprüfen, ob ein Transponder im Zuordnungsbereich vorhanden ist, oder/und um mittels der Luftschnittstelle die Datenkommunikation aufzunehmen. Es wird in diesem Zusammenhang vor allem daran gedacht, dass die Überwachungseinrichtung eine Überwachung des Umgebungsbereichs bei wesentlich geringerem elektrischem Energieverbrauch ermöglicht als der Energieverbrauch der Luftschnittsstelle im Kopplungs-Betriebszustand. Ist dies der Fall, so ermöglicht die Überwachungseinrichtung eine Reduzierung des Verbrauchs an elektrischer Energie im zeitlichen Mittel dadurch, dass der Kopplungs-Betriebszustand nur dann eingenommen werden muss, wenn die Überwachungseinrichtung auf eine Änderung in dem Umgebungsbereich oder eine Rückwirkung aus dem Überwachungsbereich angesprochen hat, die durch Zuführen eines zugeordneten Transponders in den Zuordnungsbereich ausgelöst sein könnte, so dass dann der Kopplungs-Betriebszustand nur noch eingenommen werden muss um zu überprüfen, ob tatsächlich ein Transponder im Zuordnungsbereich vorhanden ist, oder um sofort oder nach einer solchen Überprüfung die Datenkommunikation mit dem Transponder aufzunehmen.

Man kann daran denken, dass die Überwachungseinrichtung im Ruhe-Betriebszustand aktiv ist oder im Ruhe-Betriebszustand in zeitlichen Abständen wiederholt aktivierbar ist, um den Umgebungsbereich auf das Auftreten wenigstens einer Änderung bzw. Rückwirkung zu überwachen. Es ist im Prinzip also denkbar, dass die Überwachungseinrichtung ständig aktiv ist, um den Umgebungsbereich zu überwachen. In der Regel wird dies aber nicht erforderlich sein und es kommt ein Polling-Betrieb für die Überwachungseinrichtung in Betracht, um insoweit auch den Verbrauch der Überwachungseinrichtung an elektrischer Energie im zeitlichen Mittel möglichst klein zu halten.

Eine besonders bevorzugte Ausführungsform zeichnet sich dadurch aus, dass in einem/dem Überwachungs-Betriebszustand der Lese-Einheit a) die Überwachungseinrichtung aktiv ist oder in zeitlichen Abständen wiederholt aktivierbar ist, um auf das Auftreten wenigstens einer Änderung im Umgebungsbereich bzw. das Auftreten wenigstens einer Rückwirkung aus dem Umgebungsbereich ansprechen zu können, und b) die Luftschnittstelle oder zumindest wenigstens eine elektrische Energie verbrauchende Komponente der Luftschnittstelle ausgeschaltet ist, so dass der elektrische Energieverbrauch der Luftschnittstelle zumindest reduziert ist; wobei die Steuereinrichtung dafür ausgeführt oder programmiert ist, selbsttätig aus dem Überwachungs-Betriebszustand in den Kopplungs-Betriebszustand umzuschalten, wenn die Überwachungseinrichtung auf eine Änderung im Umgebungsbereich bzw. auf eine Rückwirkung aus dem Umgebungsbereich anspricht.

Betreffend die Ausgestaltung und das Funktionsprinzip der Überwachungseinrichtung bestehen im Prinzip viele Möglichkeiten. Man könnte daran denken, dass die Überwachungseinrichtung akustische oder elektromagnetische Wellen abstrahlt und auf reflektierte Wellen anspricht oder dass die Überwachungseinrichtung auf Infrarotstrahlung anspricht. Es wird hierzu auf entsprechende Lösungen zur Raumüberwachung bzw. zum automatischen Einschalten von Beleuchtungen als in Frage kommende Realisierungen hingewiesen. Demgegenüber ist es aber bevorzugt, dass die Überwachungseinrichtung dafür ausgeführt ist, auf eine Änderung wenigstens einer elektrischen oder/und magnetischen Eigenschaft oder/und wenigstens einer elektromagnetischen Eigenschaft des Umgebungsbereichs anzusprechen. Es wird hier vor allem an definierte Änderungen der elektrischen bzw. magnetischen Eigenschaften des Umgebungsbereichs gedacht, die durch Zuführen eines Transponders in den Umgebungsbereich auslösbar sind, der in Abhängigkeit von dem Transpondertyp in der Regel eine definierte elektrische oder magnetische Charakteristik aufweisen wird, so dass durch Berücksichtigung von in Frage kommenden Transpondern ein selektiveres Ansprechen der Überwachungseinrichtung ermöglicht ist, zumindest in Bezug auf bestimmte, dann vorzugsweise einzusetzende Transpondertypen.

Als besonders zweckmäßig wird vorgeschlagen, dass die Überwachungseinrichtung dafür ausgeführt ist, auf einen im Umgebungsbereich befindlichen Schwingkreis oder/und auf eine im Umgebungsbereich befindliche Induktivität anzusprechen, der bzw. die auf Basis eines elektrischen oder/und magnetischen Wechselfelds oder auf Basis eines elektromagnetischen Wechselfelds mit einem Schwingkreis oder/und einer Induktivität der Überwachungseinrichtung wechselwirkt. Auf diese Weise lässt sich eine besonders hohe Selektivität des Ansprechens der Überwachungseinrichtung erreichen, wobei eine aus der Wechselwirkung resultierende Rückwirkung technisch einfach erfasst werden kann.

Weiterbildend wird vorgeschlagen, dass die Überwachungseinrichtung dafür ausgeführt ist, wenigstens eines von einem sich in den Überwachungsbereich erstreckenden elektrischen Sensor-Wechselfeld und magnetischem Sensor-Wechselfeld und elektromagnetischem Sensor-Wechselfeld zu erzeugen und wenigstens eine Sensor-Größe zu erfassen, die auf Basis des Sensor-Wechselfelds von der elektrischen bzw. magnetischen bzw. elektromagnetischen Eigenschaft des Umgebungsbereichs abhängt oder/und die auf Basis des Sensor-Wechselfelds von einer magnetischen oder/und elektrischen oder/und elektromagnetischen Rückwirkung aus dem Umgebungsbereich abhängt. Betreffend die Rückwirkung wird dabei daran gedacht, dass diese eine Rückwirkung des Schwingkreises bzw. der Induktivität im Umgebungsbereich auf den Schwingkreis bzw. die Induktivität eines Schwingkreises der Überwachungseinrichtung ist.

Eine so ausgeführte Überwachungseinrichtung kann kostengünstig mit leicht verfügbaren Komponenten realisiert werden. Es ergibt sich auch der Vorteil, dass Komponenten der Luftschnittstelle gewünschtenfalls eine Doppelfunktion erfüllen können, nämlich einerseits - im Kopplungs-Betriebszustand - als Bestandteil oder zugeordnete Komponente der Luftschnittstelle und andererseits, - im Ruhe-Betriebszustand bzw. Überwachungs-Betriebszustand - als Bestandteil oder zugeordnete Komponente der Überwachungseinrichtung. Beispielsweise kann eine Antennenanordnung oder/und eine Schwingkreisanordnung eine solche Doppelfunktion erfüllen. Selbst wenn etwa die Antennenanordnung oder allgemein eine Felderzeugungsanordnung einerseits im Kopplungs-Betriebszustand der Luftschnittsstelle zugehörig ist und andererseits im Ruhe-Betriebszustand bzw. Überwachungs-Betriebszustand der Überwachungseinrichtung zugehörig ist, macht es in einer funktionellen Betrachtung Sinn, die Überwachungseinrichtung als von der Luftschnittsstelle unabhängig anzusehen.

Aus den obigen Ausführungen ergibt sich schon, dass vorzugsweise ein der Erzeugung des Sensor-Wechselfelds zuzuschreibender elektrischer Energieverbrauch gegenüber einem der Erzeugung des von der Luftschnittstelle im Kopplungs-Betriebszustand erzeugten Wechselfelds zuzuschreibender elektrischer Energieverbrauch reduziert ist. In diesem Zusammenhang wird daran gedacht, dass eine Feldstärke des Sensor-Wechselfelds oder/und eine hierdurch abgestrahlte Leistung gegenüber einer Feldstärke des von der Luftschnittstelle im Kopplungs-Betriebszustand erzeugten Wechselfelds bzw. einer hierdurch abgestrahlten Leistung reduziert ist. Bezogen auf die schon angesprochenen Passiv-Transponder wird in diesem Zusammenhang daran gedacht, dass das von der Luftschnittstelle im Kopplungs-Betriebszustand erzeugte Wechselfeld dafür geeignet ist, einen zugeordneten Passiv-Transponder im Zuordnungsbereich mit für den Betrieb des Passiv-Transponder hinreichender elektrischer Energie zu versorgen, wohingegen das Sensor-Wechselfeld nicht dafür geeignet ist, einen solchen Passiv-Transponder im Zuordnungsbereich mit für den Betrieb des Passiv-Transponder hinreichender elektrischer Energie zu versorgen.

Wenn hier von einem Sensor-Wechselfeld die Rede ist, so muss hierdurch nicht unbedingt eine spezielle Art der Erzeugung oder eine spezielle Charakteristik des von der Überwachungs-Einrichtung erzeugten Wechselfelds impliziert sein, sondern es ist vor allem die Funktion dieses Wechselfelds angesprochen, nämlich dass es eine Art Sensorfunktion erfüllt, Zweckmäßige Unterschiede zwischen dem Sensor-Wechselfeld einerseits und dem Wechselfeld der Luftschnittstelle hinsichtlich Energieverbrauch usw. wurden schon erwähnt.

Nach einer bevorzugten Ausgestaltung weist die Überwachungseinrichtung einen Oszillator auf, der zu einer der Erzeugung des Sensor-Wechselfelds zugrunde liegenden freien elektrischen Schwingung anregbar ist, derart, dass eine momentane Schwingfrequenz von der elektrischen bzw. magnetischen bzw. elektromagnetischen Eigenschaft des Umgebungsbereichs bzw. von der Rückwirkung aus dem Umgebungsbereich abhängt, wobei die momentane Schwingfrequenz oder eine diese wiederspiegelnde Erfassungsgröße oder eine von der Schwingfrequenz bzw. Erfassungsgröße abhängige Folgegröße als Sensor-Größe erfassbar ist.

Weiterbildend wird vorgeschlagen, dass die Überwachungseinrichtung dafür ausgeführt oder programmiert ist, eine jeweils erfasste Sensor-Größe oder erfasste Sensor-Größen mit wenigstens einer vorgegebenen oder wenigstens einer aus wenigstens einer zuvor erfassten Sensor-Größe vorgebbaren Referenzgröße auf Basis wenigstens einer vorgegebenen Überwachungsbedingung zu vergleichen und in Abhängigkeit von der Erfüllung bzw. Nicht-Erfüllung der Überwachungsbedingung auf eine Änderung im Umgebungsbereich bzw. Rückwirkung aus dem Umgebungsbereich anzusprechen oder nicht anzusprechen. Auf diese Weise kann eine gute Selektivität der Überwachungseinrichtung in Bezug auf die Erfassung einer Zuführung eines Transponders in dem Umgebungsbereich erzielt werden.

Man kann vorteilhaft vorsehen, dass die Lese-Einheit in einen Kalibrierungs-Betriebszustand, vorzugsweise einen in zeitlichen Abständen selbsttätig wiederholt eingenommenen Autokalibierungs-Betriebszustand, umschaltbar ist, in dem auf Grundlage wenigstens einer durch die Überwachungseinrichtung erfassten Sensor-Größe, vorzugsweise einer über einen Kalibrierungs-Zeitraum erfassten mittleren Sensor-Größe, die oder wenigstens eine für einen folgenden Überwachungsbetrieb der Überwachungseinrichtung maßgebliche Referenzgröße bestimmt und als vorgegebene Referenzgröße gesetzt wird. Zumindest eine Grund-Kalibrierung nach Platzierung der Lese-Einheit an einer bestimmten Stelle ist vorteilhaft, da so die elektrischen bzw. magnetischen Eigenschaften der Umgebung der Lese-Einheit berücksichtigt werden können. So wird die sich einstellende Schwingfrequenz beispielsweise von dem Material einer die Lese-Einheit enthaltenden oder haltenden Aufnahme- oder Halteanordnung abhängen, sowie von in der näheren Umgebung vorhandenen Materialien. Eine in zeitlichen Abständen, ggf. periodisch wiederholte Kalibrierung könnte Änderungen der Schwingfrequenz in Folge Änderungen der Temperatur oder Änderungen in der Umgebung berücksichtigen. Auch die Überwachungsbedingungen selbst könnten ggf. kalibrierbar sein. Auf Grundlage solcher Kalibrierungen, wie angesprochen, sind dann Änderungen der Schwingfrequenz in Folge einer Zuführung eines Transponders in den Umgebungsbereich zuverlässig erfassbar.

Betreffend die Erfassung einer Sensor-Größe bestehen grundsätzlich viele Möglichkeiten. Nach einer bevorzugten Ausführungsform ist vorgesehen, dass die Überwachungseinrichtung einen auf die elektrische Schwingung ansprechenden Zähler aufweist, wobei momentane Zählerstände oder hieraus ermittelte Folgegrößen oder auf Grundlage des Erreichens eines jeweiligen Trigger-Zählerstands bestimmte Größen als Sensor-Größen erfassbar sind. So kann die Überwachungseinrichtung besonders kostengünstig realisiert werden.

Aus den vorangehenden Ausführungen und dem Sinn und Zweck der Überwachungseinrichtung als Bestandteil der Lese-Einheit ergibt sich schon, dass die Überwachungsbedingungen und das Sensor-Wechselfeld vorzugsweise derart gewählt bzw. eingestellt oder einstellbar sind, dass eine Zuführung eines Transponders in dem Zuordnungsbereich eine Änderung der elektrischen bzw. magnetischen bzw. elektromagnetischen Eigenschaft des Umgebungsbereichs bzw. eine Rückwirkung aus dem Umgebungsbereich hervorruft, die das Ansprechen der Überwachungseinrichtung zur Folge hat, so dass in Folge die Steuereinrichtung mit der Umschaltung in den Kopplungs-Betriebszustand reagiert.

Zweckmäßig kann die Lese-Einheit wenigstens eine Felderzeugungsanordnung, ggf. Antennenanordnung aufweisen, die als Überwachungs-Felderzeugungsanordnung, ggf. Überwachungs-Antennenanordnung, der Überwachungseinrichtung zugeordnet oder zuordenbar ist für die Erzeugung des Sensor-Wechselfelds. Weiterbildend wird vorgeschlagen, dass die der Überwachungseinrichtung zugeordnete Überwachungs-Felderzeugungsanordnung als frequenzbestimmender oder frequenzbeeinflussender Bestandteil des Oszillators dient. Ferner wird vorgeschlagen, dass der Oszillator eine Verstärker-Baugruppe umfasst, dessen Ausgang über die Überwachungs-Felderzeugungsanordnung im Sinne einer Mitkopplung zu einem Eingang der Verstärker-Baugruppe zurückgekoppelt oder rückkoppelbar ist.

Nach einer besonders zweckmäßigen Ausgestaltung ist vorgesehen, dass die Verstärker-Baugruppe zusammen mit der Überwachungs-Felderzeugungsanordnung eine kapazitive oder induktive Dreipunkt-Oszillatorschaltung, vorzugsweise eine Collpits-Oszillatorschaltung, bildet. Ein solcher Oszillator kann kostengünstig bereitgestellt werden und arbeitet sehr zuverlässig.

Die Felderzeugungsanordnug, ggf. Antennenanordnung, kann im Kopplungs-Betriebszustand als Luftschnittstellen-Felderzeugungsanordnung, ggf. Luftschnittstellen-Antennenanordnung, der Luftschnittstelle betreibbar sein. Die Überwachungseinrichtung benötigt gegenüber der Luftschnittstelle also nicht unbedingt eine eigene Felderzeugungsanordnung, wie schon angesprochen.

Für einen zuverlässigen Betrieb sowohl der Überwachungseinrichtung als auch der Luftschnittstelle wird weiterbildend vorgeschlagen, dass eine Isolationsanordnung vorhanden ist, mittels der für den Betrieb als Überwachungs-Felderzeugungsanordnung die Felderzeugungsanordnung gegenüber einer Treiberschaltung der Luftschnittstelle in Bezug auf Wechselsignale oder/und in Bezug auf Gleichsignale elektrisch isolierbar ist und mittels der für den Betrieb als Luftschnittstellen-Felderzeugungsanordnung die Felderzeugungsanordnung gegenüber wenigstens einem anderen Bestandteil der Überwachungseinrichtung in Bezug auf Wechselsignale oder/und in Bezug auf Gleichsignale elektrisch isolierbar ist. Die Isolationsanordnung kann eine Schalter-Anordnung oder/und eine Dioden-Anordnung oder/und eine Kondensator-Anordnung umfassen, wobei die Schalter-Anordnung vorzugsweise als HalbleiterSchalter-Anordnung ausgeführt ist.

Der Umgebungsbereich kann den Zuordnungsbereich umfassen, also gleich groß oder größer als der Zuordnungsbereich sein. Alternativ kann der Zuordnungsbereich den Umgebungsbereich umfassen, also größer oder gleich groß wie dieser sein. In der Regel wird aber der Umgebungsbereich vollständig im Zuordnungsbereich oder wird der Zuordnungsbereich vollständig im Umgebungsbereich enthalten sein.

Betreffend den Zuordnungsbereich wird vor allem daran gedacht, dass dieser ein Nahbereich ist, derart, dass ein im Nahbereich befindlicher Transponder, ggf. Nahbereich-Transponder, auf Grundlage einer Nahfeld-Koppelung induktiv bzw. kapazitiv an die Luftschnittstelle ankoppeln kann.

Die Nahfeld-Lese-Einheit kann zur Verwendung mit Niederfrequenz-(LF)-Transpondern vorgesehen sein, wofür das Wechselfeld bzw. das Überwachungs-Wechselfeld bzw. das Sensor-Wechselfeld ein Niederfrequenz-Wechselfeld sein kann. Ferner kann die Nahfeld-Lese-Einheit zur Verwendung mit Hochfrequenz/Radiofrequenz-(HF/RF)-Transpondern vorgesehen sein, wofür das Wechselfeld bzw. das Überwachungs-Wechselfeld bzw. das Sensor-Wechselfeld ein Hochfrequenz/Radiofrequenz-Wechselfeld sein kann.

In der Regel wird die Lese-Einheit bzw. Nahbereich-Lese-Einheit als Sende-Empfangs-Einheit oder Transceiver ausgeführt sein, also nicht nur Daten aus einem Transponder auslesen können, sondern von diesem gesendete Daten empfangen können und Daten an diesen senden können. Der Kopplungs-Betriebszustand kann einen Detektionsmodus und einen Datenübertragungsmodus umfassen, wobei im Detektionsmodus ein angekoppelter Transponder im Zuordnungsbereich detektierbar ist und im Datenübertragungsmodus wenigstens ein Datenwert aus dem detektierten Transponder auslesbar bzw. von diesem empfangbar oder/und wenigsten ein Datenwert an den detektierten Transponder sendbar ist.

In der Regel wird die Luftschnittstelle der Lese-Einheit dafür ausgeführt sein, Datensignale zu einem angekoppelten Transponder zu übertragen oder/und Datensignale von einem angekoppelten Transponder zu empfangen. In diesem Zusammenhang wird daran gedacht, dass die Steuereinrichtung der Lese-Einheit für eine zumindest unidirektionale, vorzugsweise bidirektionale Datenkommunikation mit einem angekoppelten Transponder vermittels der Luftschnittstelle ausgeführt oder programmiert ist.

Nach den Erfindungs- und Weiterbildungsvorschlägen ist es ohne weiteres möglich; dass die elektrische Energieversorgung der Lese-Einheit eine Batterie- oder Akkumulator-Energieversorgung ist, ohne dass sich hieraus irgend welche praktischen Probleme ergeben.

Es wird vor allem, aber nicht ausschließlich daran gedacht, dass die Lese-Einheit als Leser nach einem Radio-Frequency-Identification-(RFID)-Standard betreibbar ist oder dass die Lese-Einheit wahlweise als Leser oder Transponder nach einem Radio-Frequency-Identification-(RFID)- oder Near-Field-Communication-(NFC)-Standard betreibbar ist. Die Kommunikation zwischen NFC-Geräten kann einerseits wie bei herkömmlichen RFID-Geräten zwischen einem aktiven und einem passiven Gerät geführt werden als auch zwischen einem aktiven Gerät und einem weiteren aktiven Gerät im Sinne einer Peer-to-Peer-Kommunikation, woraus sich große anwendungstechnische Vorteile ergeben.

Eine Überwachungseinrichtung zur Überwachung eines Umgebungsbereichs auf Änderungen sowie ein Überwachungsverfahren zur Überwachung eines Umgebungsbereichs auf Änderungen sind bekannt, beispielsweise von Annäherungsschaltern, selbsttätig sich einschaltenden Beleuchtungen usw. und beruhen teilweise auf der Aussendung von Ultraschall oder elektromagnetischer Strahlung, beispielsweise Radiowellen, sowie teilweise zusätzlich oder alternativ auf der Erfassung von Infrarotstrahlung.

Demgegenüber wird für die Überwachungseinrichtung vorgeschlagen, dass diese dafür ausgeführt ist, wenigstens eines von einem sich in den Überwachungsbereich erstreckenden elektrischen Sensor-Wechselfeld und magnetischen Sensor-Wechselfeld und elektromagnetischen Sensor-Wechselfeld zu erzeugen und wenigstens eine auf Basis des Sensor-Wechselfelds von einer elektrischen oder/und magnetischen Eigenschaft oder/und einer elektromagnetischen Eigenschaft des Umgebungsbereichs abhängende oder/und auf Basis des Sensor-Wechselfelds von einer Rückwirkung aus dem Umgebungsbereich abhängende Sensor-Größe zu erfassen und mit wenigstens einer vorgegebenen oder vorgebbaren Referenz-Größe auf Basis wenigstens einer vorgegebenen Überwachungsbedingung zu vergleichen. Vorteilhaft kann die Überwachungseinrichtung einen Oszillator aufweisen, der zu einer der Erzeugung des Sensor-Wechselfelds zugrunde liegenden freien elektrischen Schwingung anregbar ist, derart, dass eine momentane Schwingfrequenz von der elektrischen bzw, magnetischen bzw. elektromagnetischen Eigenschaft des Umgebungsbereichs bzw. der Rückwirkung aus dem Umgebungsbereich abhängt, wobei die momentane Schwingfrequenz oder eine diese wiederspiegelnde Erfassungsgröße oder eine von der Schwingfrequenz bzw. Erfassungsgröße abhängige Folgegröße als Sensor-Größe erfassbar ist.

Die Überwachungseinrichtung kann vorteilhaft dafür ausgeführt sein, auf einen im Umgebungsbereich befindlichen Schwingkreis oder/und auf eine im Umgebungsbereich befindliche Induktivität anzusprechen, der bzw. die auf Basis des Sensor-Wechselfelds mit einem zum Oszillator gehörenden Schwingkreis oder/und einer zum Oszillator gehörenden Induktivität wechselwirkt und so auf die Schwingfrequenz rückwirkt.

Für das Überwachungsverfahren wird vorgeschlagen, dass wenigstens eines von einem sich in dem Überwachungsbereich erstreckenden elektrischen Sensor-Wechselfeld und magnetischen Sensor-Wechselfeld und elektromagnetischen Sensor-Wechselfeld erzeugt wird und wenigstens eine auf Basis des Sensor-Wechselfelds von einer elektrischen oder/und magnetischen Eigenschaft oder/und einer elektromagnetischen Eigenschaft des Umgebungsbereichs abhängende oder/und auf Basis des Sensor-Wechselfelds von einer Rückwirkung aus dem Umgebungsbereich abhängende Sensor-Größe erfasst und mit wenigstens einer vorgegebenen oder vorgebbaren Referenz-Größe auf Basis wenigstens einer vorgegebenen Überwachungsbedingung verglichen wird. Vorteilhaft kann ein Oszillator zu einer der Erzeugung des Sensors-Wechselfelds zugrunde liegenden freien elektrischen Schwingung angeregt werden, derart, dass eine momentane Schwingfrequenz von der elektrischen bzw. magnetischen bzw. elektromagnetischen Eigenschaft des Umgebungsbereichs bzw. der Rückwirkung aus dem Umgebungsbereich abhängt, wobei die momentane Schwingfrequenz oder eine diese wiederspiegelnde Erfassungsgröße oder eine von der Schwingfrequenz bzw. Erfassungsgröße abhängige Folgegröße als Sensor-Größe erfasst wird.

Das Verfahren kann sich durch ein Ansprechen auf einen im Umgebungsbereich befindlichen Schwingkreis oder/und auf eine im Umgebungsbereich befindliche Induktivität auszeichnen, der bzw. die auf Basis des Sensors-Wechselfelds mit einem zum Oszillator gehörenden Schwingkreis oder/und einer zum Oszillator gehörenden Induktivität wechselwirkt und so auf die Schwingfrequenz rückwirkt.

Die Überwachungseinrichtung kann Teil einer Lese-Einheit nach dem ersten Aspekt der Erfindung sein oder für eine solche bestimmt sein. Das Überwachungsverfahren kann Teil eines Betriebsverfahrens einer Lese-Einheit nach dem ersten Aspekt der Erfindung sein. Aus den vorstehenden Ausführungen zu der Lese-Einheit nach dem ersten Aspekt der Erfindung und deren Weiterbildung mit einer Überwachungseinrichtung ergeben sich weitere vorteilhafte Merkmale der Überwachungseinrichtung und des Überwachungsverfahrens nach dem zweiten Aspekt der Erfindung.

Ein Verfahren zur Steuerung eines Systems bei der Aufnahme einer drahtlosen Datenübertragung zwischen einer ersten Komponente und einer zweiten tragbaren Komponente, umfassend die Aktivierung wenigstens einer Luftschnittstelle für die drahtlose Datenkommunikationist beispielsweise aus der EP 0 744 843 B1, der DE 195 19 450 A1 und der EP 1 585 268 A2 bekannt. Die bekannten Verfahren beruhen auf der Aussendung eines Aktivierungssignals von der einen zur anderen Komponente, wodurch das Verfahren nur in bestimmten Systemzusammenhängen zweckmäßig eingesetzt werden kann.

Es wird vorgeschlagen, dass die erste Komponente einen Umgebungsbereich kontinuierlich oder - vorzugsweise - in zeitlichen Abständen wiederholt auf das Auftreten wenigstens einer vordefinierten Änderung oder/und auf das Auftreten wenigstens einer vordefinierten Rückwirkung aus dem Umgebungsbereich überwacht, und dann, wenn eine solche Änderung bzw. Rückwirkung auftritt, die Luftschnittstelle für die drahtlose Datenübertragung sowie ggf. für die Energieversorgung der zweiten Komponente über die Luftschnittstelle aktiviert, wobei die vordefinierte Änderung bzw. Rückwirkung dadurch hervorgerufen wird, dass die zweite Komponente in den Umgebungsbereich zugeführt wird. Bei der ersten Komponente kann es sich beispielsweise um eine Lese-Einheit nach dem ersten Aspekt der Erfindung handeln. Bei der zweiten tragbaren Komponente kann es sich beispielsweise um einen Transponder, beispielsweise um einen RFID- oder NFC-Transponder handeln.

Weiterbildend wird vorgeschlagen, dass die erste Komponente den Umgebungsbereich auf das Auftreten einer Änderung wenigstens einer elektrischen oder magnetischen oder elektromagnetischen Eigenschaft des Umgebungsbereichs überwacht. In diesem Zusammenhang wird als besonders bevorzugt vorgeschlagen, dass die erste Komponente auf einen im Umgebungsbereich befindlichen Schwingkreis oder/und auf eine im Umgebungsbereich befindliche Induktivität anspricht, der bzw. die auf Basis eines elektrischen oder/und magnetischen oder auf Basis eines elektromagnetischen Wechselfelds mit einem Schwingkreis oder/und einer Induktivität der ersten Komponente wechselwirkt. Eine bevorzugte Ausgestaltung sieht vor, dass die erste Komponente den Umgebungsbereich gemäß dem Überwachungsverfahren nach dem zweiten Aspekt der Erfindung überwacht. Die erste Komponente kann hierzu als Überwachungseinrichtung ausgeführt sein oder eine derartige Überwachungseinrichtung aufweisen.

Bevorzugt ist also vorgesehen, dass die erste Komponente wenigstens eines von einem sich in den Überwachungsbereich erstreckenden elektrischen Sensor-Wechselfeld und magnetischen Sensor-Wechselfeld und elektromagnetischen Sensor-Wechselfeld erzeugt und wenigstens eine auf Basis des Sensor-Wechselfelds von einer elektrischen oder/und magnetischen Eigenschaft oder/und einer elektromagnetischen Eigenschaft des Umgebungsbereichs abhängende oder/und auf Basis des Sensor-Wechselfelds von einer Rückwirkung aus dem Umgebungsbereichs abhängende Sensor-Größe erfasst und mit wenigstens einer vorgegebenen oder vorgebbaren Referenz-Größe auf Basis wenigstens einer vorgegebenen Überwachungsbedingung vergleicht. Hierzu kann ein Oszillator der ersten Komponente zu einer der Erzeugung des Sensor-Wechselfelds zugrunde liegenden freien elektrischen Schwingung angeregt werden, derart, dass eine momentane Schwingfrequenz von der elektrischen bzw. magnetischen bzw. elektromagnetischen Eigenschaft des Umgebungsbereichs bzw. der Rückwirkung aus dem Umgebungsbereich abhängt, wobei die momentane Schwingfrequenz oder eine diese wiederspiegelnde Erfassungsgröße oder eine von der Schwingfrequenz bzw. Erfassungsgröße abhängige Folgegröße als Sensor-Größe erfasst wird. So kann insbesondere erreicht werden, dass die erste Komponente auf einen im Umgebungsbereich befindlichen Schwingkreis oder/und auf eine im Umgebungsbereich befindliche Induktivität anspricht, der bzw. die auf Basis des Sensor-Wechselfelds mit einem zum Oszillator gehörenden Schwingkreis oder/und einer zum Oszillator gehörenden Induktivität wechselwirkt und so auf die Schwingfrequenz rückwirkt.

Ein System zur Identitätsfeststellung oder/und Berechtigungsfeststellung und ggf. zum Ermöglichen bzw. Verhindern eines logischen oder/und physikalischen Zugangs zu einer Zieleinrichtung umfasst eine ggf. der Zieleinrichtung zugeordnete erste Einheit, welche eine Feststelleinrichtung aufweist, die dafür ausgeführt ist, auf Grundlage eines vorzugsweise verschlüsselten oder/und bidirektionalen Datenaustausches über eine erste Luftschnittstelle der ersten Einheit mit einer zweiten Einheit eine Identität oder/und eine Berechtigung festzustellen, wobei die erste Luftschnittstelle für einen drahtlosen Datenaustausch über eine erste Reichweite ausgelegt ist; und wenigstens eine der ersten Einheit zugeordnete zweite Einheit, welche eine Mitteilungseinrichtung aufweist, die dafür ausgeführt ist, auf Grundlage von vorhandenen Identifizierungsdaten oder/und Berechtigungsdaten und des über die erste Luftschnittstelle und eine zweite Luftschnittstelle der zweiten Einheit über die erste Reichweite durchgeführten Datenaustausches der Feststelleinrichtung der ersten Einheit eine Identität oder/und eine Berechtigung mitzuteilen.

Bekannt sind diverse Einrichtungen und Verfahren zum Identifizieren von Personen und Ermöglichen bzw. Verhindern eines logischen und/oder physikalischen Zugangs zu einer Zieleinrichtung, die beispielsweise auf Grund tragbarer und stationärer Identifizierungseinheiten oder Identifizierungsmedien (kurz Identmedien) arbeiten, beispielsweise in Form von Schlüsseln, Chipkarten und Transpondern. Es wird hierzu auf die DE 103 41 370 A1, die WO 2005/027055 A1, die EP 1 253 559 A2 und die DE 20 2006 006 859 U1 der Anmelderin verwiesen sowie auf den darin behandelten Stand der Technik. Von allgemeinem Interesse in diesem Zusammenhang sind auch die EP 0 744 843 B1, die EP 1 643 457 A1, die DE 102 40 396 A1 und die DE 203 06 923 U1 sowie der darin behandelte Stand der Technik. Die Offenbarung der angesprochenen Schriften der Anmelderin wird durch Bezugnahme in die Offenbarung der vorliegenden Anmeldung einbezogen.

Derartige Systeme und Verfahren zum Identifizieren sind speziell auch im Zusammenhang mit sog. elektronischen oder digitalen Schließzylindern (Elektronikzylinder) bekannt geworden, bei denen ein jeweiliger digitaler Schließzylinder mittels eines Transponders, ggf. eines einen BiometrieSensor, beispielsweise Fingerabdruck-Sensor, aufweisenden Transponders, auf drahtlosem Wege für das Öffnen einer Tür entsperrbar ist. Es wird hierzu auf den Transponder 3064, den Biometrie-Transponder Q3007, den digitalen Schließzylinder 3061 sowie allgemein das digitale Schließ- und Organisationssystem 3060 der Anmelderin hingewiesen. Ferner wird hingewiesen auf die zu diesem System zugehörige, als Alternative zu einem Transponder verwendbare, stationär anbringbare Pin-Code-Tastatur 3068, mittels der durch Eingabe eines die Zugangsberechtigung angebenden Pin-Codes ein jeweiliger digitaler Schließzylinder für ein Türöffnen auf drahtlosem Wege entsperrbar ist. Zum System der Anmelderin gehört ferner auch eine als Smart-Relais 3063 bezeichnete Relais-Einheit, mit der unter Verwendung eines Transponders oder einer Pin-Code-Tastatur sonstige Maschinen oder Anlagen gesteuert werden können.

Die Luftschnittstellen der angesprochenen Komponenten des Systems der Anmelderin arbeiten in einem Niederfrequenzbereich mit vergleichsweise geringer Reichweite, um gezielt einen digitalen Schließzylinder für das Öffnen einer Tür entsperren zu können oder gezielt bestimmte Einrichtungen oder Anlagen ansteuern zu können und Fehlbedienungen durch Ansteuerung weiter entfernt liegender Schließzylinder oder Anlagen sicher zu vermeiden. Dem System liegt insoweit die Philosophie zugrunde, betreffend die Ermöglichung einer Türöffnung oder Ansteuerung irgend eines Geräts oder einer Einrichtung für die Luftschnittstelle zwischen der Identifizierungseinheit (Transponder bzw. Pin-Code-Tastatur) und zwischen dem digitalen Schließzylinder bzw. der Relais-Einheit gewissermaßen auf eine "Nahwirkung" zu setzen, um mittels einer tragbaren Identifizierungseinheit verschiedene Türen gezielt öffnen bzw. verschiedene Geräte gezielt ansteuern zu können, ohne erst noch einen die bestimmte Tür oder das bestimmte Gerät bzw. die bestimmte Anlage identifizierenden Code oder dergleichen eingeben zu müssen.

Bezug nehmend auf das angesprochene System zur Identitätsfeststellung bzw. Berechtigungsfeststellung und ggf. Ermöglichen bzw. Verhindern eines logischen bzw. physikalischen Zugangs zu einer Zieleinrichtung können bei dem bekannten System der Anmelderin der digitale Schließzylinder oder das Smart-Relais jeweils als erste Einheit und die verschiedenen Transponder und die PIN-Code-Tastatur jeweils als zweite Einheit identifiziert werden.

Es wurde schon daran gedacht, als Firmenausweis oder dergleichen vorgesehene Identmedien, beispielsweise sog. SmartCards, mit einer Schlüsselfunktion zu versehen, da heutzutage beispielsweise Großunternehmen dazu übergehen, die visuelle Identifizierungsfunktion (mittels Foto auf Firmenausweis) sowie eine elektronische Identifizierungsfunktion auf ein- und dasselbe Identmedium zu bringen. Die Vereinheitlichung von Firmenausweisverwaltung und Schlüsselverwaltung führt zu offensichtlichen Einsparpotentialen. Ein Lösungsansatz, um SmartCards oder andere als Firmenausweis dienende Ident-Cards mit einer Schlüsselfunktion für elektronische Schließsysteme, insbesondere sog. elektronische oder digitale Schließzylinder, auszustatten, ist in der EP 1 253 559 A2 beschrieben. Diese Offenlegungsschrift schlägt einen Identkartenhalter zur Vereinigung von Firmenausweis und Schlüsselfunktion vor, der eine Identkarten-Lese-Einrichtung sowie eine Steuerungseinrichtung und eine Nahbereichsfunkschnittstelle für die Kommunikation mit einem Elektronikzylinder einer Schließanlage aufweist.

Der Identkartenhalter ermöglicht für die Schließanlage die Verwendung einer an sich für andere Zwecke vorgesehenen Indentkarte anstelle eines die Nahbereichsfunkschnittstelle aufweisende, speziell auf den Elektronikzylinder bezogenen aktiven bzw. passiven Transponders etwa gemäß DE 106 14 215, ohne dass neue Identkarten mit einer derartigen Nahbereichsfunkschnittstelle ausgegeben werden müssen. Bezug nehmend auf das angesprochene System zum sicheren personalisierten Identifizieren und ggf. Ermöglichen bzw. Verhindern eines logischen oder/und physikalischen Zugangs zu einer Zieleinrichtung kann der Identkartenhalter zusammen mit einem jeweiligen Firmenausweis als zweite Einheit des Systems identifiziert werden.

Ein System der angesprochenen Art zuschaffen, bei dem es ohne weiteres möglich ist, verschiedene, typischerweise verschiedenen Personen zugeordnete Identmedien, die zwar an sich für einen drahtlosen Datenaustausch geeignet sind, die aber von sich aus mit der ersten Einheit nicht drahtlos in Verbindung treten können, zur personalisierten Identifizierung bzw. Berechtigungsfeststellung gegenüber der ersten Einheit tauglich zu machen.

Ein System zur Identitätsfeststellung oder/und Berechtigungsfeststellung und ggf. zum Ermöglichen bzw. Verhindern eines logischen oder/und physikalischen Zugangs zu einer Zieleinrichtung umfasst eine ggf. der Zieleinrichtung zugeordnete erste Einheit, welche eine Feststelleinrichtung aufweist, die dafür ausgeführt ist, auf Grundlage eines vorzugsweise verschlüsselten oder/und bidirektionalen Datenaustausches über eine erste Luftschnittstelle der ersten Einheit mit einer zweiten Einheit eine Identität oder/und eine Berechtigung festzustellen, wobei die erste Luftschnittstelle für einen drahtlosen Datenaustausch über eine erste Reichweite ausgelegt ist; und wenigstens eine der ersten Einheit zugeordnete zweite Einheit, welche eine Mitteilungseinrichtung aufweist, die dafür ausgeführt ist, auf Grundlage von vorhandenen Identifizierungsdaten oder/und Berechtigungsdaten und des über die erste Luftschnittstelle und eine zweite Luftschnittstelle der zweiten Einheit über die erste Reichweite durchgeführten Datenaustausches der Feststelleinrichtung der ersten Einheit eine Identität oder/und eine Berechtigung mitzuteilen, wobei das System erfindungsgemäß zusätzlich wenigstens ein tragbares Identmedium aufweist, welches zumindest identifizierungsdaten trägt und eine Identmedium-Luftschnittstelle aufweist, welche für ein drahtloses Auslesen oder Übertragen zumindest der Identifizierungsdaten oder auf Grundlage dieser Identifizierungsdaten von einer Feststelleinrichtung des Identmediums im Falle einer positiven Feststellung einer Identität oder/und Berechtigung gelieferte Identifizierungsdaten oder/und Berechtigungsdaten über eine zweite Reichweite ausgelegt ist; wobei die Mitteilungseinrichtung der zweiten Einheit ferner dafür ausgeführt ist, über eine dritte Luftschnittstelle der zweiten Einheit und die Identmedium-Luftschnittstelle über die zweite Reichweite zumindest die Identifizierungsdaten oder/und Berechtigungsdaten von dem Identmedium zu empfangen oder aus diesem auszulesen und diese Daten oder auf Grundlage dieser Daten von einer Feststellfunktionalität der Mitteilungseinrichtung der zweiten Einheit im Falle einer positiven Feststellung einer Identität oder/und Berechtigung gelieferte Identifizierungsdaten oder/und Berechtigungsdaten als vorhandene Identifzierungsdaten bzw. Berechtigungsdaten für die Mitteilung einer Identität bzw. Berechtigung an die Feststelleinrichtung der ersten Einheit zu verwenden.

Es dient also nicht die zweite Einheit als Identmedium oder die Kombination aus einem Identmedium und einem mechanisch damit verbundenen Halter, sondern die zweite Einheit ist gegenüber dem tragbaren Identmedium eine gesonderte, unabhängig von diesem vorzugsweise stationär in Zuordnung zur ersten Einheit platzierbare Einheit, die mit dem tragbaren Identmedium drahtlos verbindbar ist, um auf Grundlage zumindest der vom Identmedium getragenen Identifizierungsdaten die Identitätsfeststellung bzw.

Berechtigungsfeststellung unter Durchführung einer drahtloser Datenkommunikation zwischen der ersten und der zweiten Einheit und der zweiten Einheit und dem Identmedium zu ermöglichen.

Der Erfindungsvorschlag ist speziell auch, aber nicht ausschließlich darauf gerichtet, Drahtlosschnittstellen aufweisende SmartCards, Transponder und dgl., insbesondere RFID- oder NFC-Transponder, für die personalisierte Identifizierung bzw. den personalisierten Berechtigungsnachweis gegenüber der ersten Einheit, beispielsweise einer Schließanlage oder einem digitalen Schließzylinder, wie schon angesprochen, tauglich zu machen. Hierzu reicht es im Prinzip schon aus, wenn mittels der zweiten Einheit von dem Identmedium getragene Identifizierungsdaten der ersten Einheit mitgeteilt werden, wobei all diese Daten auf drahtlosem Wege ausgelesen bzw. übermittelt werden. Für eine höhere Sicherheit ist es aber bevorzugt, dass die Identitätsfeststelleinrichtung eine Authentifizierungseinrichtung ist und dafür ausgeführt ist, eine mitgeteilte Identität bzw. Berechtigung zu authentifizieren, auf Grundlage von von einer Authentisierungseinrichtung auf drahtlosem Wege gelieferten Authentisierungsdaten. Der Begriff Authentifizierung bezeichnet hierbei den Vorgang der Überprüfung (Verifikation) der behaupteten Identität bzw. Berechtigung eines Gegenübers (beispielsweise einer das tragbare Identmedium tragenden Person bzw. das Identmedium selbst) in einem Dialog, wohingegen der Begriff Authentisierung den Vorgang des Nachweises der eigenen Identität bzw. Berechtigung bezeichnet. Häufig werden diese beiden Ausdrücke synonym verwendet. Relevante Authentisierungsverfahren beruhen auf der Benutzung eines Besitzes (das eine Identität behauptende Subjekt besitzt etwas, beispielsweise einen Schlüssel), der Preisgabe eines Wissens (das Subjekt weiß etwas, beispielsweise ein Passwort) und der Anwesenheit des Subjektes selbst (das Subjekt ist etwas, beispielsweise Verwendung eine biometrischen Merkmals). All diese Ansätze kommen im Zusammenhang mit dem Erfindungsvorschlag nach dem vierten Aspekt in Betracht.

Es kommt durchaus in Betracht, dass seitens der ersten Einheit eine Authentifizierung auf Grundlage einer durch die zweite Einheit durchgeführten Authentisierung und auf Seiten der zweiten Einheit eine Authentifizierung auf Basis einer vom Identmedium durchgeführten Authentisierung durchgeführt wird. Ferner kann auf Seiten der ersten Einheit eine Authentifizierung auf Basis einer durch das Identmedium unter Vermittlung der zweiten Einheit durchgeführten Authentisierung durchgeführt werden. Ferner könnte auch auf Seiten des Identmedium eine Authentifizierung durchgeführt werden, insbesondere auf Basis einer durch einen Benutzer durch Wechselwirkung mit dem Identmedium durchgeführten Authentisierung, beispielsweise durch Eingabe eines PIN-Codes oder durch Eingabe eines biometrischen Merkmals mittels eines Biometriesensors. Soweit etwa auf Seiten des Identmediums oder auf Seiten der zweiten Einheit die Feststellung einer Identität bzw. Berechtigung erfolgt, vorzugsweise authentifiziert erfolgt, reicht es im Prinzip aus, dass an die zweite Einheit bzw. an die erste Einheit nur Daten weitergegeben werden, die angeben, dass die Identität bzw. die Berechtigung positiv festgestellt, vorzugsweise authentifiziert festgestellt, wurde, wobei ggf. noch die Art der Berechtigung angegeben wird. Diese von der zweiten Einheit bzw. der ersten Einheit drahtlos erhaltenen Daten stellen in diesem Fall von einer bestimmten Person oder einem bestimmten Identmedium abstrahierte Identifizierungsdaten bzw. Berechtigungsdaten dar, die die Feststellung einer abstrakten Identität bzw. Berechtigung ermöglichen, etwa der Identität als Administrator oder Zugangsberechtigter, ggf. mit einer eine bestimmte Reichweite habenden Berechtigung. Es braucht so seitens der ersten Einheit bzw. seitens der zweiten Einheit keine Pflege einer Datenbank, die personenbezogene bzw. Identmedien bezogene Identitäten und Berechtigungen angibt, erfolgen, sondern es reicht, wenn das Identmedium Identifizierungsdaten trägt oder bereitstellen kann, die gewissermaßen als Schlüsseldaten die Zugehörigkeit zu einer abstrakten Identität oder das Vorliegen einer bestimmten Berechtigung nachweisen. Seitens des Identmediums oder/und seitens der zweiten Einheit oder/und seitens der ersten Einheit durchgeführten Authentifizierungen können im Falle einer solchen Realisierung sich somit vor allem darauf richten, einen Missbrauch zu verhindern und insbesondere zu überprüfen, ob der Benutzer des Identmediums der "richtige" Benutzer ist bzw. dass das mit der zweiten Einheit wechselwirkende Identmedium ein "echtes" Identmedium ist bzw. dass die mit der ersten Einheit wechselwirkende zweite Einheit eine "echte" zweite Einheit ist.

Vor dem Hintergrund dieser allgemeinen Erläuterungen wird konkret vorgeschlagen, dass die Feststelleinrichtung der ersten Einheit eine Authentifizierungseinrichtung ist und dafür ausgeführt ist, eine mitgeteilte Identität bzw. Berechtigung zu authentifizieren und die Mitteilungseinrichtung eine Authentisierungseinrichtung ist und dafür ausgeführt ist, die mitgeteilte Identität bzw. Berechtigung durch Übermittlung von Authentisierungsdaten über die zweite und die erste Luftschnittstelle nachzuweisen. Weiterbildend wird vorgeschlagen, dass die als Authentisierungseinrichtung dienende Mitteilungseinrichtung dafür ausgeführt ist, die Authentisierungsdaten über die dritte Luftschnittstelle und die Identmedium-Luftschnittstelle von dem Identmedium zu empfangen oder aus diesem auszulesen.

Vorzugsweise alternativ, gewünschtenfalls aber auch zusätzlich, kann man vorsehen, dass die Feststelleinrichtung der ersten Einheit eine Authentifizierungseinrichtung ist und dafür ausgeführt ist, eine mitgeteilte Identität bzw. Berechtigung zu authentifizieren, und eine Authentisierungseinrichtung des Identmediums dafür ausgeführt ist, unter Vermittlung der Mitteilungseinrichtung die mitgeteilte Identität bzw. Berechtigung durch Übermittlung von Authentifizierungsdaten über die dritte Luftschnittstelle und die Identmedium-Luftschnittstelle sowie über die zweite und die erste Luftschnittstelle nachzuweisen. Auch in diesem Falle können alle angesprochenen Ansätze der Authentifizierung zum Einsatz kommen. Im Gegensatz zu der zuvor angesprochenen Ausgestaltung weist nach dem alternativen Weiterbildungsvorschlag das Identmedium die Authentisierungseinrichtung auf, und die zweite Einheit kann primär nur eine Relaisfunktion erfüllen, um die Kommunikation zwischen der ersten Einheit und dem Identmedium zu ermöglichen.

Alternativ oder zusätzlich zu der Ausführung der Feststelleinrichtung der ersten Einheit als Authentifizierungseinrichtung kann vorgesehen sein, dass die Mitteilungseinrichtung eine Authentifizierungseinrichtung ist und dafür ausgeführt ist, für die positive Feststellung einer Identität bzw. Berechtigung diese zu authentifizieren, und eine Authentisierungseinrichtung des Identmediums dafür ausgeführt ist, die Identität bzw. Berechtigung durch Übermittlung von Authentisierungsdaten über die dritte Luftschnittstelle und die Identmedium-Luftschnittstelle nachzuweisen.

Im Falle der Ausführung des Identmediums mit einer eigenen Feststelleinrichtung kann diese eine Authentifizierungseinrichtung sein, die dafür ausgeführt ist, für die positive Feststellung einer Identität bzw. Berechtigung diese zu authentifizieren, vorzugsweise auf Grundlage einer Interaktion mit dem Benutzer etwa im Wege einer PIN-Code-Eingabe oder der Eingabe eines biometrischen Merkmals. Die letzteren beiden Ausgestaltungen kommen insbesondere in Betracht, wenn das Identmedium ein elektronisches Gerät ist, beispielsweise ein Mobiltelefon oder ein mobiler Computer.

Betreffend die seitens der ersten Einheit bzw. seitens der zweiten Einheit durchführbaren Authentifizierungen wird als besonders bevorzugt vorgeschlagen, dass die Authentifizierungseinrichtung der ersten Einheit und die Authentisierungseinrichtung der zweiten Einheit bzw. des Identmediums bzw. dass die Authentifizierungseinrichtung der zweiten Einheit und die Authentisierungseinrichtung des Identmediums dafür ausgeführt sind, für die Durchführung einer Challenge-Response-Authentifizierung zusammenzuwirken. Die Challenge-Response-Authentifizierung ist ein Beispiel für eine Authentifizierung anhand von Wissen, bei der das Wissen aber nicht selbst übermittelt wird, um die Gefahr der Preisgabe des Wissens auszuschließen. Stattdessen wird nur ein Beweis dafür geliefert, dass das sich authentisierende Subjekt das Wissen zweifelsfrei besitzt.

Anzumerken ist, dass im Rahmen der Erfindungs- und Weiterbildungsvorschläge diverse Authentisierungsbzw. Authentifizierungsmethoden zum Einsatz kommen können. Eine Authentifizierung bzw. Authentisierung durch spezielle Verfahren ist - wie schon angesprochen - aber nicht zwingend. Die Identitätsfeststellung bzw. Berechtigungsfeststellung kann auch alleine auf Basis der vom Identmedium getragenen Identifizierungsdaten erfolgen, die gemäß in Frage kommenden Realisierungsmöglichkeiten entweder von der zweiten Einheit oder von der ersten Einheit für die Identitätsfeststellung bzw. Berechtigungsfeststellung ausgewertet werden. Bei solchen Realisierungen würde die Authentifizierung sich gewissermaßen aus der Lieferung dieser Daten selbst ergeben.

Zweckmäßig kann man vorsehen, dass die erste Reichweite merklich größer als die zweite Reichweite ist, vorzugsweise um mindestens etwa einen Faktor 3 bis 10. Es wird beispielsweise daran gedacht, dass die erste Reichweite mindestens etwa 20 cm, vorzugsweise mindestens etwa 70 cm, höchstvorzugsweise mindestens etwa 2,5 cm beträgt und die zweite Reichweite maximal etwa 10 cm, vorzugsweise maximal etwa 5 cm beträgt. Die Identmedium-Luftschnittstelle kann also eine wesentlich kürzere Reichweite aufweisen als die erste und zweite Luftschnittstelle der ersten Einheit bzw. der zweiten Einheit. Es können so Identmedien zur Identifizierung gegenüber der ersten Einheit verwendet werden, die alleine schon aus Abstandsgründen direkt nicht mit der ersten Einheit zusammenwirken können.

Ferner kann mittels der zweiten Einheit eine Anpassung zwischen verschiedenen Datenübertragungsstandards bzw. Datenübertragungstechniken erreicht werden. Man kann dementsprechend vorsehen, dass die erste und die zweite Luftschnittstelle für eine Datenübertragung gemäß einer ersten Übertragungstechnik oder/und nach einem ersten Übertragungsstandard ausgeführt sind und dass die dritte Luftschnittstelle und die Identmedium-Luftschnittstelle für eine Datenübertragung gemäß einer zweiten, von der ersten verschiedenen Übertragungstechnik oder/und nach einem zweiten, von dem ersten verschiedenen Übertragungsstandard ausgeführt sind.

Gemäß einer bevorzugten Ausführungsform dient eine Lese-Einheit, vorzugsweise eine RFID- oder eine NFC-Lese-Einheit nach dem ersten Aspekt der Erfindung als zweite Einheit, wobei die Luftschnittstelle der Lese-Einheit die dritte Luftschnittstelle darstellt, die zum Koppeln mit wenigstens einem als Identmedium dienenden Transponder, vorzugsweise RFID- bzw. NFC-Transponder, vorgesehen ist, und eine weitere, der ersten Einheit zugeordnete Luftschnittstelle der Lese-Einheit die zweite Luftschnittstelle darstellt.

Es wird vor allem daran gedacht, dass die erste Einheit wenigstens einen Aktor aufweist oder der ersten Einheit eine gesonderte Aktoreinrichtung mit wenigstens einem Aktor zugeordnet ist, wobei die erste Einheit für eine Betätigung oder Auslösung des Aktors in Abhängigkeit von einer erfolgreichen Identifizierung ausgeführt ist.

Weiterbildend wird vorgeschlagen, dass die erste Einheit eine Schließeinheit ist, die in Abhängigkeit von einer erfolgreichen Identifizierung vermittels des Aktors einen physikalischen Zugang freigibt, beispielsweise das Öffnen einer Tür auslöst oder entsperrt. Besonders bevorzugt ist vorgesehen, dass die erste Einheit in einen elektronischen Schließzylinder integriert ist. Eine zweckmäßige Möglichkeit ist hierbei die Integration der ersten Einheit in eine Handhabe des Schließzylinders, die im Falle einer Tür auf einer Seite eines Türblatts von diesem vorsteht. In diesem Falle kann vorgesehen sein, dass bei geschlossener Tür die zweite Einheit auf der gegenüber der die erste Einheit aufweisenden Handhabe anderen Seite der Tür angeordnet ist, wodurch beispielsweise ermöglicht wird, das Identmedium mit sehr kurzer Reichweite, beispielsweise passive RFID-Karten mit einer Übertragungsweite von nur 3 bis 5 cm, vermittels der zweiten Einheit mit der ersten Einheit wechselwirken können. Alternativ oder zusätzlich kann die bzw. eine zweite Einheit auf der gleichen Seite der Tür wie die die erste Einheit aufweisende Handhabe vorgesehen sein. In der Regel wird man auf beiden Seiten der Tür eine jeweilige zweite Einheit vorsehen, dies ist aber nicht zwingend.

Das Identmedium bzw. der Transponder kann als Daten- oder Chipkarte, beispielsweise eine sog. SmartCard, ausgeführt sein. Eine andere Möglichkeit ist, dass das Identmedium bzw. der Transponder in ein elektronisches Gerät integriert ist, beispielsweise ein Mobilfunkgerät oder ein Handheld-Computer.

Die Erfindung in ihren verschiedenen Aspekten wird im Folgenden anhand von in den Figuren gezeigten Ausführungsbeispielen näher erläutert.

Fig. 1    zeigt schematisch ein die verschiedenen Aspekte der Erfindung exemplarisch verwirklichendes Schließsystem mit einem tragbaren Identmedium, einer Schließeinheit und einer zwischen dem Identmedium und der Schließeinheit vermittelnden Vermittlungseinheit, jeweils schematisch in Form von Blockdiagrammen dargestellt.

Fig. 2    zeigt ein schematisches Blockdiagramm der Vermittlungseinheit.

Fig. 3 zeigt eine mögliche Realisierung einer Luftschnittstellen- Einrichtung mit zugehörigen Komponenten der Vermittlungseinheit gemäß einer ersten Ausführungsvariante.

Fig.4 zeigt eine mögliche Realisierung einer Luftschnittstellen-Einrichtung mit zugehörigen Komponenten der Vermittlungseinheit gemäß einer zweiten Ausführungsvariante.

Die Erfindung stellt nach einem ersten Aspekt eine Lese-Einheit mit einer zur Erzeugung eines elektrischen oder magnetischen oder elektromagnetischen Wechselfelds dienenden Luftschnittstelle bereit, die selbsttätig zwischen verschiedenen Betriebszuständen einschließlich einem einen geringeren Energieverbrauch mit sich bringenden Ruhe-Betriebszustand umschaltbar ist. Die Erfindungs- und Weiterbildungsvorschläge nach dem ersten Aspekt lassen sich unabhängig von einer speziellen Anwendungssituation auf RFID- oder NFC-Lese-Einheiten und mit diesen zusammenwirkende RFID- oder NFC-Transponder anwenden, beispielsweise auf Lese-Einheiten und Transponder nach dem ISO 14443A/Mifare oder dem FeliCa-Standard sowie nach anderen einschlägigen Standards. Es wird insbesondere an Lese-Einheiten und Transponder gedacht, die über eine Nahfeld-Kopplung miteinander wechselwirken, beispielsweise auf Grundlage eines 125 kHz oder 13,56 MHz Wechselfelds. Von besonderer Relevanz ist eine induktive Nahfeldkopplung zwischen einer Lese-Einheit und einem Transponder, die im Falle eines passiven Transponders zur Energieversorgung des Transponders aus dem Wechselfeld dient.

Nach einem zweiten Aspekt bezieht sich die Erfindung auf eine Überwachungseinrichtung und ein Überwachungsverfahren zur Überwachung eines Umgebungsbereichs mittels eines elektrischen oder magnetischen oder elektromagnetischen Sensor-Wechselfelds. Die Überwachungseinrichtung und das Überwachungsverfahren beruhen darauf, dass wenigstens eine von einer elektrischen oder magnetischen oder elektromagnetischen Eigenschaft des Umgebungsbereichs abhängende oder/und von einer Rückwirkung aus dem Umgebungsbereich Sensor-Größe erfasst wird, um auf Änderungen einer elektrischen bzw. magnetischen Eigenschaft eines Umgebungsbereichs ansprechen zu können. Als Sensor-Größe kommt besonders vorteilhaft direkt oder indirekt eine momentane Schwingfrequenz eines der Erzeugung des Wechselfelds dienenden Oszillators in Betracht. Die Erfindungs- und Weiterbildungsvorschläge nach dem zweiten Aspekt können zweckmäßig im Kontext der Erfindung nach dem ersten Aspekt zum Einsatz kommen, sind aber auch universell in anderen Zusammenhängen anwendbar. Die folgende Erläuterung in Zusammenhang mit einer Schließanlage und einer RFID- oder LFC-Lese-Einheit gibt also nur rein exemplarisch eine von diversen Einsatzmöglichkeiten dar.

Nach einem dritten Aspekt stellt die Erfindung ein Verfahren zur Steuerung eines Systems bei der Aufnahme einer drahtlosen Datenübertragung zwischen einer ersten Komponente und einer zweiten tragbaren Komponente bereit. Zwar kann das Verfahren nach dem dritten Aspekt besonders zweckmäßig im Zusammenhang mit einer Lese-Einheit nach dem ersten Aspekt zum Einsatz kommen und sehr zweckmäßig auch eine Überwachungseinrichtung bzw. auch ein Überwachungsverfahren nach dem zweiten Aspekt verwenden. Es sind aber auch völlig andere Anwendungssituationen denkbar.

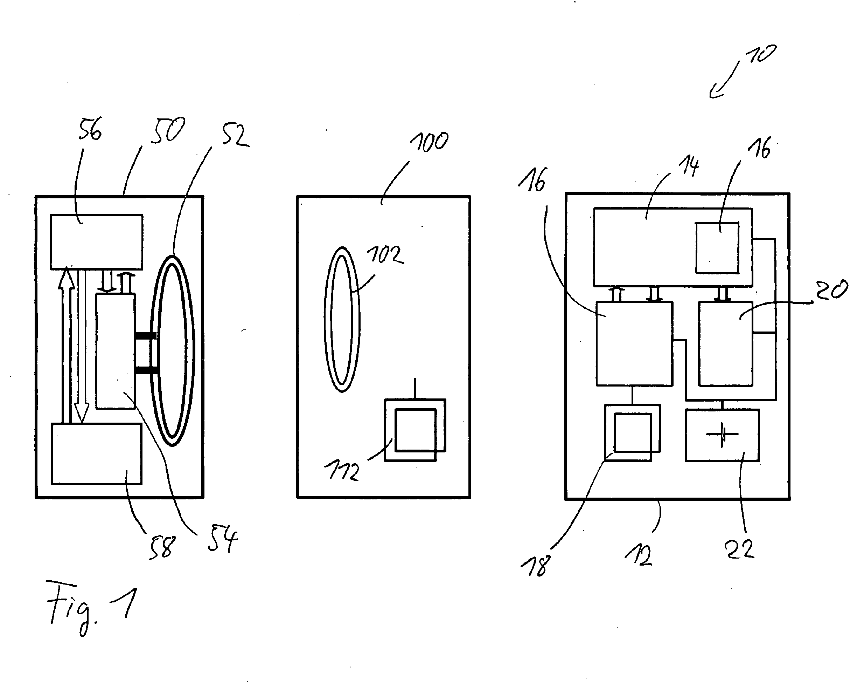

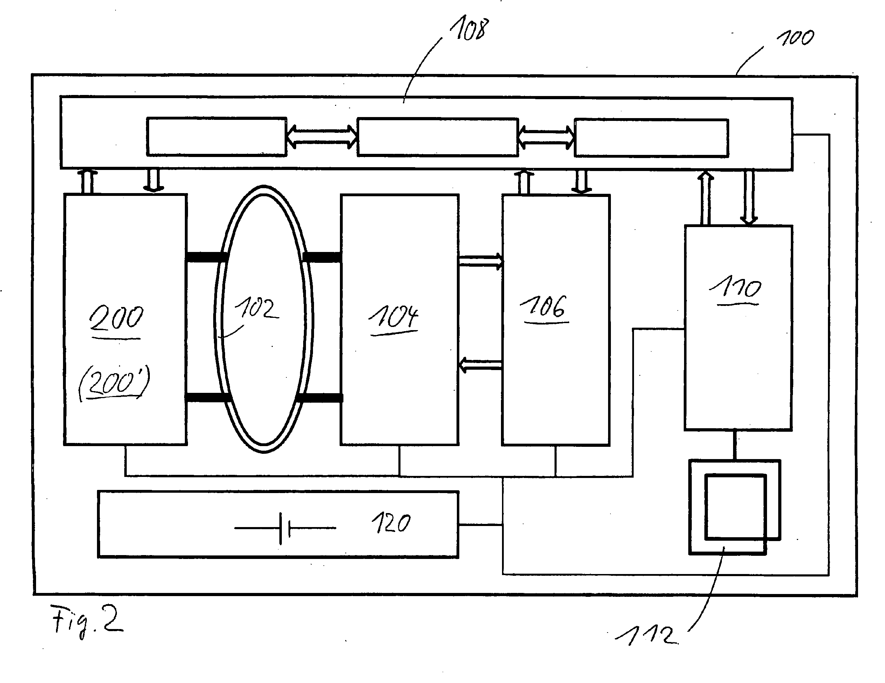

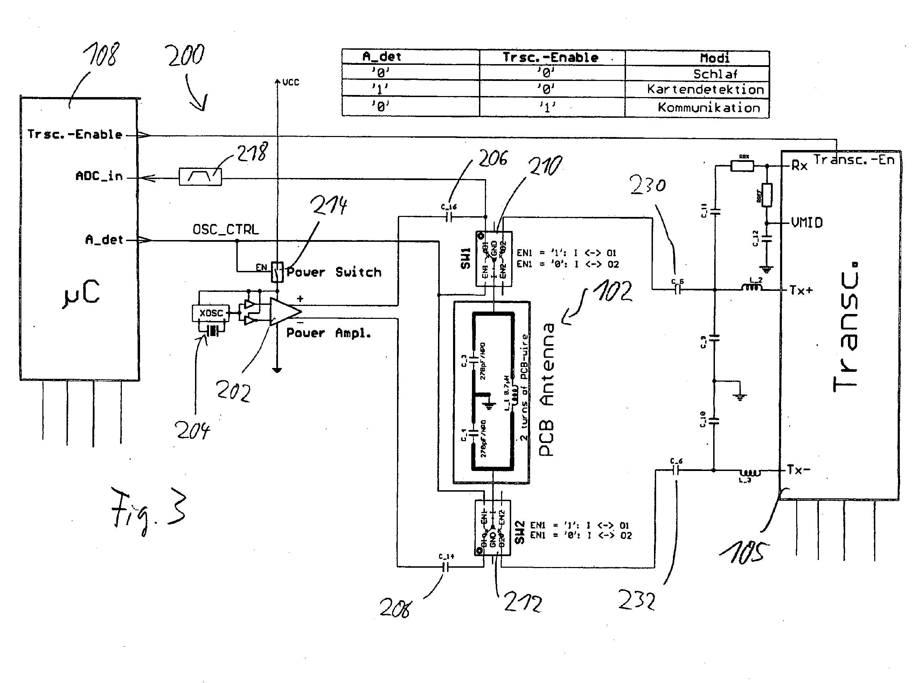

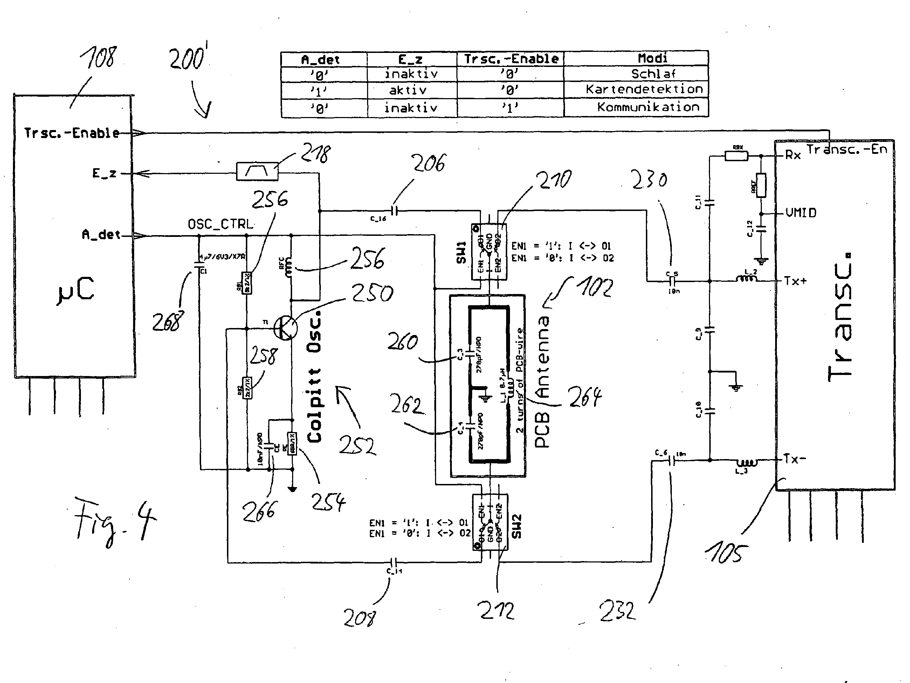

Nach einem vierten Aspekt stellt die Erfindung ein System zur Identitätsfeststellung oder/und Berechtigungsfeststellung und ggf. Ermöglichen bzw. Verhindern eines logischen oder/und physikalischen Zugangs zu einer Zieleinrichtung bereit. Fig. 1 und Fig. 2 zeigen schematisch ein Beispiel für eine Konkretisierung dieses Systems als Schließsystem, das mit den Fig. 3 und 4 gezeigten Ausführungsvarianten zugleich auch die Erfindung nach dem ersten, zweiten und dritten Aspekt exemplarisch ausführt. Die Erfindungs- und Weiterbildungsvorschläge nach dem vierten Aspekt lassen sich aber auch unabhängig von den Erfindungs- und Weiterbildungsvorschlägen nach dem ersten, zweiten und dritten Aspekt der Erfindung realisieren.

Fig. 1 zeigt ein Schließsystem 10 mit einer Schließeinheit 12, die zweckmäßig in einen sog. digitalen oder elektronischen Schließzylinder integriert sein kann. Ein Prozessor 14 mit einem internen RAM- oder/und ROM-Bereich 16 ist bidirektional mit einer Sende- und Empfangselektronik 16 verbunden, an der eine Antennenanordnung 18 angeschlossen ist. Die Sende- und Empfangselektronik 16 in Kombination mit der Antenne 18 bildet eine Luftschnittstelle für die drahtlose Kommunikation beispielsweise mittels eines Wechsel-Magnetfelds, beispielsweise im Längstwellen-, Langwellen- oder Mittelwellen-Frequenzbereich. Das Wechsel-Magnetfeld hat vorzugsweise eine Reichweite von etwa bis zu 1.5 m und besonders bevorzugt von etwa ca. 5 m oder mehr. Die Luftschnittstelle 16, 18 ist dafür vorgesehen, eine Datenkommunikation mit der Luftschnittstelle eines der Schließeinheit 12 zugeordneten Identmediums durchzuführen, beispielsweise eines tragbaren Identmediums entsprechend DE 103 41 370 A1 oder eines stationären Identmediums entsprechend DE 20 2006 859 U1. Bevorzugt weist der Prozessor 14 eine softwaremäßig und/oder hardwaremäßig realisierte Authentifizierungsfunktionalität auf, um im Zusammenwirken mit einer Authentisierungsfunktionalität eines entsprechenden Prozessors des Identmediums das Identmedium verifiziert als berechtigt identifizieren zu können. Zweckmäßig kann eine Challenge-Response-Authentifizierung mittels einer entsprechenden Challenge-Response-Kommunikation zwischen dem Prozessor 14 der Schließeinheit und dem Prozessor des Identmediums über die Luftschnittstelle durchgeführt werden. Die Authentisierung des Identmediums gegenüber der Schließeinheit kann selbst auf einer Authentifizierung auf Seiten des Identmediums beruhen. Beispielsweise kann das Identmedium dafür ausgeführt sein, dass ein Benutzer seine Berechtigung durch die Eingabe eines PIN-Codes oder eines biometrischen Merkmals, beispielsweise eines Fingerabdrucks, mittels eines Biometrie-Sensors, ggf. Fingerabdruck-Sensors, des Identmediums nachweisen muss, bevor das Identmedium sich bzw. den das Identmedium benutzenden Benutzer der Schließeinheit über die Luftschnittstelle als berechtigt identifiziert, etwa über die angesprochene Challenge-Response-Kommunikation. Derartige Schließeinheiten und derartige Identmedien sind Stand der Technik und es wird auf verschiedene Transponder, PIN-Code-Tastaturen, digitale Schließzylinder und sonstige Produkte der Anmelderin verwiesen.

Im Falle eines digitalen Schließzylinders weist die darin integrierte Schließeinheit 12 einen Aktor 20 auf, der im Falle der Identifizierung eines Identmediums bzw. dessen Benutzers als berechtigt durch den Prozessor 14 für die Entsperrung einer Schließmechanik auslösbar ist, so dass beispielsweise der Benutzer nun durch Betätigung einer Handhabe des Schließzylinders eine Tür aufschließen und öffnen kann. Beispielsweise kann der Aktor als Magnet bzw. Hubmagnet oder Motor ausgeführt sein. In anderen Zusammenhängen sind aber auch andere Aktoren denkbar, beispielsweise eine Schaltung, ein Prozessor und ein Softwareprogramm. Eine mechanische Entsperrung ist also nicht zwingend. Die verschiedenen Komponenten der Schließeinheit werden durch eine Batterie-Energieversorgung 22 mit elektrischer Energie versorgt. Je nach Anwendungssituation kommt aber auch eine Energieversorgung aus dem Netz in Betracht.

Auch im Rahmen eines erfindungsgemäßen Schließsystems wird daran gedacht, dass die Schließeinheit 12 mit Identmedien, insbesondere Transpondern, wie angesprochen zusammenwirken kann. Erfindungsgemäß ist aber vorgesehen, dass auch andersartige Identmedien mit einer Schlüsselfunktion in Bezug auf die Schließeinheit 12 ausgestattet sind oder werden, die direkt nicht über die Luftschnittstelle 16, 18 mit dem Prozessor 14 der Schließeinheit kommunizieren können, sei es, weil eine andere Datenübertragungstechnik oder ein anderes Datenübertragungsprotokoll für solche andersartigen Identmedien realisiert ist, sei es, dass eine Reichweite einer Luftschnittstelle eines solchen andersartigen Identmediums nicht ausreicht, eine Datenkommunikation zwischen der Schließeinheit und dem Identmedium direkt zu ermöglichen. Es wird insoweit an Identmedien mit sehr kurzreichweitiger, auf Nahfeldern basierender Luftschnittstelle gedacht, deren Reichweite u.U. nur wenige Zentimeter beträgt. Im Falle eines digitalen Schließzylinders könnte die Reichweite zu kurz sein, um von dem auf der einen Türseite von einem Benutzer gehaltenen oder getragenen Identmedium die u.U. in einer Handhabe des Schließzylinders auf der anderen Türseite integrierte Schließeinheit zu erreichen, so dass es insoweit nichts bringen würde, die Schließeinheit mit einer zu der Luftschnittstelle des Identmediums passenden Luftschnittstelle auszustatten.

Ein Beispiel für ein entsprechendes Identmedium ist ein beispielsweise in Kartenform ausgeführter passiver RFID-Transponder, etwa nach dem ISO 14444A/Mifare- oder FeliCa-Standard, dessen Luftschnittstelle für eine induktive Nahfeld-Wechselwirkung bei 13,56 MHz ausgelegt ist, wobei die die Komponenten des Transponders versorgende elektrische Energie dem von einer zugeordneten Lese-Einheit erzeugten induktiven Nah-Wechselfeld genommen wird. Ein entsprechender Transponder ist in Fig. 1 mit 50 bezeichnet und weist eine Antennenanordnung 52 und eine Empfangs- und Sende-Elektronik 54 auf. Die Sende- und Empfangs-Elektronik 54 stellt einerseits den übrigen Komponenten des Transponders die aus dem Wechselfeld entnommene, gleichgerichtete elektrische Energie zur Verfügung und ist andererseits bidirektional mit einem Prozessor 56 verbunden, der aus einem Speicherbereich 58 zumindest Daten auslesen kann und ggf. auch Daten in den Speicherbereich 58 schreiben kann. Für die dem Schließsystem der Fig. 1 zugrundeliegende spezielle Anwendung sind in den Speicherbereich 58 auch als Identifizierungsdaten bezeichenbare Schlüsseldaten aufgenommen oder in diesen einschreibbar, um unter Vermittlung einer als RFID-Lese-Einheit ausgeführten Vermittlungseinheit 100 eine Zugangsberechtigung gegenüber der Schließeinheit auf drahtlosem Wege nachzuweisen. Das Identmedium 50 kann ferner auch mit einem Biometriesensor oder einer PIN-Code-Eingabemöglichkeit ausgestattet sein, um eine höhere Sicherheit gegen Missbrauch zu geben.

Die Lese-Einheit 100 bzw. die eine Lese-Funktion erfüllende Vermittlungseinheit 100 weist eine zu der Luftschnittstelle 52, 54 komplimentäre Luftschnittstelle 102, 104 und 106 auf, wobei 102 eine Antennenanordnung, 104 eine die Antenne 102 treibende Analogschaltungsanordnung und 106 eine mit der Analogschaltungsanordnung bidirektional verbundene Transceiverschaltung, beispielsweise ein Universal Asynchronous Receiver Transmitter (UART) bezeichnet. In der Sende- und Empfangselektronik 54 des Transponders 50 sind die Funktionen einer komplementären Analogschaltung und einer komplementären Transceiverschaltung integriert.

Die Analogschaltung 104 ist dafür ausgeführt, ein quarzstabilisiertes elektrisches Wechselfeld zu erzeugen, welches die Antennenanordnung 102 treibt. Beispielsweise durch eine Lastmodulation können Daten zu dem Transponder 50 übertragen werden. Die Sende-oder Empfangselektronik 54 des Transponders kann ebenfalls Daten in Richtung zur Lese-Einheit übertragen, beispielsweise ebenfalls durch eine Lastmodulation.

Der Transceiver 106 empfängt zu dem Transponder zu übertragene Daten von einem Prozessor 108 und führt vom Transponder 50 empfangene Daten dem Prozessor 108 zu. Der Prozessor 108 kann verschiedene Komponenten integriert haben, die ohne Weiteres auch gesondert vom Prozessor angeordnet sein könnten, beispielsweise Speicherbereiche, Interrupt-Timer, Zähler und A/D-Wandier oder dgl., wie in Fig. 2 durch bidirektional verbundene Blöcke in dem den Prozessor 108 repräsentierenden Block angedeutet.

Mit dem Prozessor 108 ist für die Vermittlungsfunktion der Vermittlungseinheit 100 eine Sende- und Empfangselektronik 110 bidirektional verbunden, an der eine Antennenanordnung 112 angeschlossen ist. Die Sende- und Empfangselektronik 110 und die Antennenanordnung 112 bildet eine Luftschnittstelle, die zur Luftschnittstelle 20, 22 der Schließeinheit 12 komplimentär ist. Mittels der Luftschnittstelle 102, 104, 106 der Vermittlungsstelle 100 und der Luftschnittstelle 52, 54 des Identmediums 50 aus diesem ausgelesene bzw. zur Vermittlungseinheit übertragene Identdaten, so insbesondere aus dem Speicherbereich 58 des Identmediums 50 stammende Identdaten, werden vom Prozessor 108 in der erhaltenen Form oder weiterverarbeitet vermittels der Luftschnittstelle 110, 112 zu der Schließeinheit 12 übertragen, die diese Daten vermittels der Luftschnittstelle 16, 18 empfängt und vermittels des Prozessors 18 auswertet. Eine andere Möglichkeit ist, dass der Prozessor 108 der Vermittlungseinheit 100 die vom Indentmedium 50 empfangenen Identdaten auswertet und dann im Falle einer positiven Feststellung einer Identität oder Berechtigung von den vom Identmedium 50 erhaltenen Identdaten abstrahierte Identdaten vermittels der Luftschnittsstelle 110, 112 zur Schließeinheit 12 überträgt, die diese Daten vermittels der Luftschnittsstelle 16, 18 empfängt und vermittels des Prozessors 14 auswertet. Es könnte also beispielsweise der Schließeinheit gewissermaßen nur die Information gegeben werden, dass eine Zugangsberechtigung vorliegt. Es bestehen hier viele Möglichkeiten für die Realisierung im Detail. Im einfachsten Fall reicht die Übertragung eines bestimmten Identifizierungsdatensatzes vom Identmedium 50 über die Vermittlungseinheit 100 zur Schließeinheit 12, damit der Prozessor 14 den Aktor 20 im Sinne der Freigabe eines Zugangs bzw. des Entsperrens einer Schließung ansteuert. Bevorzugt wird allerdings durch den Prozessor 14 der Schließeinheit 12 eine Authentifizierung etwa auf Grundlage eines Challenge-Response-Datendialogs durchgeführt, wobei vor allem daran gedacht wird, dass die entsprechende Authentisierung entweder der Prozessor 108 der Vermittlungseinheit 100 oder der Prozessor 56 des Identmediums 50 durchführt. In letzterem Falle würde die Vermittlungseinheit 100 in der Tat nur als Einrichtung zur Vermittlung der Datenübertragung zwischen dem Identmedium 50 und der Schließeinheit 12 dienen. Eine Authentifizierung auf Seiten der Vermittlungseinheit 100 durch deren Prozessor 108 in Verbindung mit einer von dem Prozessor 56 des Identmediums 50 durchgeführten Authentisierung ist zusätzlich oder alternativ ebenfalls denkbar. So oder so erfüllen das Identmedium 50 in Kombination mit der Vermittlungseinheit 100 in einer funktionellen Betrachtung im Wesentlichen diejenigen Funktionen, die ein herkömmlicher, direkt auf die Schließeinheit bezogener und eine zur Luftschnittstelle 16, 18 komplimentäre Luftschnittstelle aufweisender Transponder erfüllt.

Bevorzugt ist die Vermittlungseinheit 100 mit einer Energieversorgung 120 auf Batterie- oder Akkubasis, vorzugsweise auf Batteriebasis mit einer Batterieanordnung sehr großer Kapazität ausgestattet, um eine entsprechende Vermittlungseinheit oder mehrere entsprechende Vermittlungseinheiten ohne großen Installationsaufwand, und ohne Erfordernis des Vorhandenseins eines Netzanschlusses oder der Notwendigkeit, Energieversorgungskabel zu verlegen, in Nachbarschaft zu einer Schließeinheit 10 bzw. einer jeweiligen Schließeinheit 10 platziert werden zu können. Hieraus ergibt sich aber folgendes, der Realisierung der Vermittlungseinheit mit einer Batterie-Energieversorgung an sich entgegen stehendes Problem: Herkömmliche RFID-basierte Lese-Einheiten (insbesondere Karten-Leser) bauen ein permanentes elektrisches bzw. magnetisches bzw. elektromagnetisches Nahfeld (häufig 125 kHz oder 13,56 MHz) auf, so dass RFID-Karten bzw. Passivtransponder, die in dieses Nahfeld gebracht werden, sich aus diesem Feld speisen können, um mittels der so gewonnenen elektrischen Energie eine Kommunikation mit der Lese-Einheit aufbauen zu können, beispielsweise um Identdaten auszutauschen. Für den permanenten Erhalt eines solchen Nahfelds wird allerdings relativ viel Energie benötigt, was in der Praxis eine externe Energieversorgung mit entsprechend erhöhtem Installationsaufwand zwingend macht. Demgegenüber wird bei der Vermittlungseinheit 100 erfindungsgemäß eine im zeitlichen Mittel deutlich reduzierte Leistungsaufnahme realisiert, indem die Vermittlungseinheit selbsttätig zwischen verschiedenen Betriebszuständen umschaltet, zu denen ein Ruhe-Betriebszustand gehört, in dem der elektrische Energieverbrauch der Überwachungseinheit deutlich reduziert ist. In dem Ruhe-Betriebszustand können alle Komponenten der Überwachungseinheit 100 deaktiviert sein, mit Ausnahme einer Funktionalität, die ein selbsttätiges Umschalten der Überwachungseinheit aus dem Ruhe-Betriebszustand in wenigstens einen anderen Betriebszustand, beispielsweise auf Basis eines Interrupts oder eines Zählerstands eines internen Zählers des Prozessors 108 ermöglicht.

Es versteht sich, dass in dem Ruhe-Betriebszustand die der Schließeinheit 12 zugeordnete Luftschnittstelle 110, 112 idealerweise ausgeschaltet ist und dementsprechend keine elektrische Energie verbraucht. Man kann vorsehen, dass die Luftschnittstelle 110, 112 nur in einem solchen Betriebszustand der Vermittlungseinheit eingeschaltet ist, wenn die Vermittlungseinheit 100 über die Luftschnittstellen 102, 104, 106 und 52, 54 mit einem Identmedium 50 in Verbindung steht und Identdaten bzw. Authentifizierungsdaten bzw. Berechtigungsdaten zur Schließeinheit 12 zu übertragen sind. Selbstverständlich kann es aber auch noch andere Betriebszustände geben, in denen eine Datenkommunikation zwischen der Vermittlungseinheit 100 und der Schließeinheit 12 ermöglicht, also die Luftschnittstelle 11, 112 eingeschaltet ist.

Im Folgenden wird auf die Luftschnittstelle 110, 112 und die Schließeinheit 12 nicht weiter eingegangen, da es um die energiesparende, einen Betrieb auf Basis von Batterieenergie ermöglichende Ausgestaltung der Lese-Einheit 100 bzw. der Vermittlungseinheit 100 nach dem ersten Aspekt der Erfindung sowie um eine in diesem Zusammenhang in Frage kommende Überwachung einer Umgebung der Überwachungseinheit nach dem zweiten Aspekt der Erfindung wie die Steuerung eines Systems zur Aufnahme einer drahtlosen Datenübertragung zwischen einer ersten und einer zweiten Komponente gemäß dem dritten Aspekt der Erfindung anhand des beschriebenen Ausführungsbeispiels bzw.

von Ausführungsvarianten desselben geht. Die Vermittlungseinheit 100 ist insoweit als Lese-Einheit anzusehen, die auch in völlig anderen technischen Zusammenhängen zum Einsatz kommen kann und dann anstelle der Luftschnittstelle 110, 112 beispielsweise andere Funktionen realisierende Komponenten aufweisen kann, je nach Anwendungssituation.

Ein erster Ansatz zur Reduzierung der Probeaufnahme bzw. Leistungsaufnahme der Lese-Einheit 100 beruht auf einem Polling-Verfahren. Die Lese-Einheit 100 verbringt nach diesem Ansatz die meiste Zeit in einem "Schlafmodus", dem schon angesprochenen Ruhe-Betriebszustand, in dem nur sehr wenig Energie verbraucht wird. Die Lese-Einheit wacht in zeitlichen Abständen wiederholt, beispielsweise periodisch (z. B. etwa 1 Mal pro Sekunde) aus dem "Schlafmodus" auf, um festzustellen, ob sich ein Transponder in der näheren Umgebung, nämlich dem Nahfeldbereich, befindet. Hierzu wird das elektrische bzw. magnetische bzw. elektromagnetische Wechselfeld mittels der Luftschnittstelle 102, 104, 106 vollständig aufgebaut, um dann über die Luftschnittstelle die induktive bzw. kapazitive bzw. elektromagnetische Ankopplung des Transponders zu detektieren, beispielsweise über eine detektivierbare Dämpfung des Feldes, die von der analogen Schaltungsanordnung 104 als Last wahrnehmbar ist. Wird kein Transponder im Nahfeldbereich detektiert, so kehrt die Lese-Einheit 100 selbsttätig in den Ruhe-Betriebszustand zurück, um dann später (beispielsweise nach 1 Sekunde) selbsttätig wieder die Luftschnittstelle 102, 104, 106 zu aktivieren und erneut zu überprüfen, ob ein Transponder im Nahfeldbereich vorhanden ist. Gemäß dieser Betriebsweise der Lese-Einheit 100 wird die Luftschnittstelle 102, 104, 106 für das Polling in zeitlichen Abständen wiederholt an und ausgeschaltet. Die beschriebene Art der Ausführung des Pollings hat allerdings den Nachteil, dass die Luftschnittstelle 102, 104, 106 auch hinsichtlich von Bestandteilen eingeschaltet wird, die für die reine Kartendetektion, etwa über die detektierbare Last eines angekoppelten Transponders, nicht erforderlich sind, sondern der Datenkommunikation mit dem angekoppelten Transponder dienen. Für die Detektion eines angekoppelten Transponders über den Energieverlust des Wechselfeldes reicht es aber aus, ein solches Wechselfeld definiert zu erzeugen und die Dämpfung des Feldes bzw. die von dem Transponder durch die Ankoppelung an das Wechselfeld verursachte Last zu detektieren.

Dementsprechend ist bei einer ersten, auf Basis von Fig. 3 in Verbindung mit Fig. 2 zu erläuternden Ausführungsvariante die Lese-Einheit 100 mit einer eigenen, nur für die Transponderdetektion dienenden Luftschnittstelle ausgeführt, die von einer Überwachungseinrichtung 200 zusammen mit der Antennenanordnung 102 gebildet ist. Ohne Beschränkung der Allgemeinheit kann zweckmäßig die Antennenanordnung 102 sowohl zur Luftschnittstelle 102, 104, 106 als auch zur Luftschnittstelle 200, 102 gehören, und es können Schalter vorgesehen sein, die für einen Daten-Kommunikations-Betriebszustand die Antennenanordnung 102 der analogen Schaltung 104 zuschaltet und für einen Überwachungs-Betriebszustand die Antenne 102 der Überwachungseinrichtung 200 zuschaltet. Anstelle einer Schalteranordnung kann auch eine andersartige Isolationsanordnung, beispielsweise auf Basis von Dioden, insbesondere PIN-Dioden, realisiert sein. Selbstverständlich könnte die Überwachungseinrichtung 200 auch mit einer eigenen Antennenanordnung ausgestattet sein, und es ist zwar zweckmäßig, aber nicht zwingend, dass die Luftschnittstelle 102, 104 und 106 einerseits, und die Luftschnittstelle 200, 102 bzw. 200 mit zugehöriger eigener Antennenanordnung ein Wechselfeld bei der gleichen Frequenz erzeugen, das der jeweilige Transponder ankoppeln und Energie aus dem Feld beziehen kann.

Mit der Überwachungseinrichtung 200 ist ein Polling derart möglich, dass nicht die der Datenkommunikation dienende Luftschnittstelle 102, 104, 106 angeschaltet wird, um über die Ankopplung eines im Nahfeldbereich befindlichen Transponders dessen Vorhandensein zu detektieren, sondern die Luftschnittstelle 200, 102 angeschaltet wird, um über das Ankoppeln eines im Nahfeldbereich befindlichen Transponders dessen Vorhandensein zu detektieren. Die Lese-Einheit 100 schaltet deswegen in zeitlichen Abständen wiederholt zwischen dem Ruhebetriebs-Zustand, in dem beide Luftschnittstellen ausgeschaltet sind und dem Überwachungs-Betriebszustand, in dem die Luftschnittstelle 200, 102 angeschaltet ist, die der Datenkommunikation dienende Luftschnittstelle 102, 104, 106 aber ausgeschaltet ist, um. Der Prozessor 108 ist dabei so ausgeführt oder programmiert, dass er auf die Detektion eines das Vorhandensein eines Transponders im Nahfeldbereich indizierenden Energieverlusts, genauer auf eine einen solchen Energieverlust indizierende, von der Überwachungseinrichtung 200 über die Anschlüsse der Antennenanordnung 102 gesehene Last die Luftschnittstelle 102, 104, 106 anschaltet und die standardmäßige Datenkommunikation zwischen dem Transponder 50 und der Lese-Einheit 100 ermöglicht. Vor der Aufnahme einer Datenkommunikation, etwa zur Identifizierung oder Authentifizierung, kann ein zusätzlicher Überprüfungsschritt vorgesehen sein, um zu überprüfen, ob der der detektierten Last bzw. Lasterhöhung zugrunde liegende Energieverlust des Wechselfeldes tatsächlich auf einen Transponder 50 zurückzuführen ist, mit dem eine Datenkommunikation stattfinden kann.

Fig. 3 zeigt eine mögliche Ausgestaltung der Antennenanordnung 102 in Kombination mit der Überwachungseinrichtung 200 und einer beispielsweise durch einen Baustein realisierten Funktionsgruppe 105, die im Wesentlichen die Analogschaltung 104 und den Transceiver 106 enthält, und beispielsweise auf Basis eines Philips/NXP-Bausteins PN531 oder PN511 realisiert sein kann. Vorteilhaft könnte auch z. B. ein Philips/NXP-Modul PN65K zum Einsatz kommen, welches einen NFC-Controller PN531 in Kombination mit einem "Secure Smart Card" Controller aufweist, was beispielsweise für Realisierungen eines Mobiltelefons als Transponder zweckmäßig sein kann.

Die Überwachungseinrichtung 200 weist als zentralen Bestandteil einen Leistungsverstärker 202 auf, der an seinen beiden Eingängen um 180° Phasenunterschied versetzt durch das Ausgangssignal eines Quarz-Oszillators 204 angesteuert wird und über Koppel-Kondensatoren 206, 208 und Schalter 210, 212 einer als die Antennenanordnung 102 dienenden PCB-Antenne mit einem elektrischen Wechselfeld treibt, um das Wechselfeld für die Transponder-Erfassung, also ein "Überwachungs-Wechselfeld" zu erzeugen. Die Überwachungseinrichtung 200 ist dann angeschaltet, wenn der Prozessor 108 einen Pegel 1 an einem Ausgang A_det ausgibt, wodurch ein von diesem Steuersignal angesteuerter Leistungsschalter 214 geschlossen wird, so dass der Leistungsverstärker 202 sowie auch der Quarz-Oszillator 204 Betriebsspannung erhalten. Das Steuersignal A_det wird auch den Schaltern 210, 212 zugeführt, um diese in einen Schaltzustand zu schalten, in dem die Antenne 102 über die Kondensatoren 206, 208 an den Ausgängen des Leistungsverstärkers 202 angeschlossen ist und die von diesem gelieferte elektrische Schwingung eingekoppelt erhält. Über eine Pegelanpassung 218 wird ein die Amplitude der elektrischen Schwingung in der PCB-Antenne 102 repräsentierendes Spannungssignal einem Eingang ADC_in des Prozessors 108 zugeführt. Auf Basis der definierten Anregung der PCB-Antenne 102 durch die vom Verstärker 202 und dem Oszillator 204 gebildeten Treiberschaltung kann aus diesem, mittels eines A/D-Wandiers in einen Digitalwert umgesetzten Spannungssignal ein Energieverlust des erzeugten Wechselfelds als wirksame Last detektiert werden. Übersteigt diese Last einen Schwellenwert, so deutet dies auf die Ankopplung eines Transponders an das erzeugte Überwachungs-Wechselfeld hin, so dass nun durch Umschalten des Ausgangs A_det auf den Pegel 0 und Umschalten eines Ausgangs Trsc.-Enable des Prozessors 108 auf den Pegel 1 der Transceiver 105 angeschaltet wird, um nun die Luftschnittstelle 104, 106 in Verbindung mit der Antennenanordnung 102 anzuschalten. Die Ausgabe des Pegels 0 am Ausgang A_det führt dazu, dass die Schalter 210, 212 in einen zweiten Schaltzustand umgeschaltet werden, in dem die PCB-Antenne 102 über Kondensatoren 230, 232 und weitere, einer üblichen Beschaltung einer solchen Transceiver-Funktionsgruppe entsprechende Komponenten an Anschlüssen Rx, Tx+, Tx- und VMID des Transceivers 105 angeschlossen ist. Die Anschlüsse Tx+ und Tx- werden im Falle der schon angesprochenen Module PN511 und PN531 auch als TX1 und TX2 bezeichnet. An diesen Anschlüssen wird das lastmodulierte 13,56 MHz Schwingungssignal geliefert, das die PCB-Antenne . 102 speist und mittels dieser das Wechselfeld erzeugt. Der Anschluss Rx bzw. RX empfängt das lastmodulierte 13,56 MHz Schwingungssignal von der Antennenanordnung 102. Am Anschluss VMID wird eine interne Referenzspannung ausgegeben. Es wird auf entsprechende Produktinformationen zu den angesprochenen Transceiver-Modulen verwiesen.

Ist die Luftschnittstelle 102, 104, 106 bzw. 102, 105 angeschaltet, so arbeitet die Lese-Einheit 100 genauso wie herkömmliche Lese-Einheiten, insbesondere RFID-basierte Kartenleser, die ein permanentes elektromagnetisches Nahfeld bzw. Wechselfeld erzeugen.

Gemäß der Ausführungsvariante von Fig. 3 in Kombination mit Fig. 2 wird für die Transponder-Detektion das elektromagnetische Nahfeld bzw. Wechselfeld vollständig aufgebaut und die Transponder-Detektion beruht auf der Ankopplung des Transponders derart, dass dieser Energie aus dem Wechselfeld entnimmt, was als Lastzunahme detektierbar ist. Der so realisierte, die Luftschnittstelle 200, 102 benutzende Überwachungszustand kann deswegen ebenso wie der Datenkommunikation dienende, die Luftschnittstelle 102, 104, 106 benutzende Kommunikations-Betriebszustand der Lese-Einheit 100 bzw. der Vermittlungseinheit 100 als Kopplungs-Betriebszustand identifiziert werden, in dem die oder eine Luftschnittstelle eingeschaltet ist, so dass ein im Nahfeldbereich befindlicher Transponder induktiv bzw. kapazitiv bzw. elektromagnetisch an diese ankoppeln kann. Zur Transponder-Detektion wird nach Umschalten in den Überwachungs-Betriebszustand zuerst der Quarz-Oszillator aktiviert, dessen Schwingung dann verstärkt und an die PCB-Antenne angelegt. Damit eine insbesondere induktive Kopplung zwischen der Antennenanordnung 102 und einem im Nahfeldbereich befindlichen Transponder möglich ist, insbesondere der Transponder mit Energie aus dem elektrischen Feld versorgt werden kann und dementsprechend ein Spannungsrückgang auf der PCB-Antenne entsprechend der resultierenden Last (Eddy-Strom) detektierbar ist, muss ein relativ starkes Wechselfeld erzeugt werden. Auch die Schwingungserzeugung mittels Quarz-Oszillator und Verstärkung dieser Schwingung mittels des Leistungsverstärkers 202 verbraucht vergleichsweise viel elektrische Energie.

Auf Basis des realisierten Polling-Betriebs setzt sich der durchschnittliche Energieverbrauch $E_{verbr}$ der Lese-Einheit 100 in einer groben Abschätzung im Wesentlichen wie folgt zusammen:

a) Angenommen werden kann ein nur als zeitlicher Mittelwert interessierender und deswegen als quasikonstant annehmbarer Stromverbrauch $E_{det,}$ der durch das regelmäßige Aufwachen incl. Nahfeldaufbau für die Transponderdetektion (ggf.Kartendetektion) zustande kommt und

b) ein Energieverbrauch $E_{kom}$ für die Kommunikation mit erkannten Karten, so dass

$$E_{verbr} = E_{det} + E_{kom}$$

anzusetzen ist, oder - als Stromverbräuche ausgedruckt - anzusetzen ist

$$I_{verbr} = I_{det} + I_{kom}$$

wobei

- $I_{verbr}$ die durchschnittliche Gesamtstromaufnahme der Lese-Einheit (ggf.Kartenleser) ist,
- $I_{det}$ der durchschnittlich verbrauchte Strom für die (regelmäßige) Transponder-Detektion und
- $I_{kom}$ der durchschnittlich verbrauchte Strom für die (gelegentliche) Kommunikation mit erkannten Transpondern ist.

Nimmt man beispielsweise - ohne Beschränkung der Allgemeinheit - an, dass eine Lese-Einheit jeden Tag mit 200 Transpondern kommuniziert und die Kommunikation mit jedem Transponder 50 ms dauert, während der ein durchschnittlicher Strom von 100 mA von einer elektrischen Energieversorgung, insbesondere Batterie, gezogen wird, so beträgt die durchschnittliche Stromaufnahme der Lese-Einheit für das Lesen von 200 Transpondern etwa

$$I_{kom} = 200 \times 100 \text{ mA} \times 50 \text{ ms / Tag} = \textbf{11,6 µA} \; (1 \text{ Tag} \leftrightarrow 86400 \text{ s})$$

Ferner sei angenommen, dass die Lese-Einheit beim Polling zur Kartendetektion einmal pro Sekunde "aufwacht", was bedeutet, dass zuerst der Quarz-Oszillator aktiviert, die resultierende Schwingung dann verstärkt und an die Antenne angelegt wird. Bei diesem Ansatz zur Transponder-Detektion nimmt ein 13,56 MHz RFID- bzw. NFC-Kartenleser typischerweise 70 mA über eine Zeitdauer von 2 ms auf. Bei Annäherung eines Transponders, insbesondere eines Transponders in Form einer üblichen Karte, lässt sich dann ein 5-10%-iger Spannungsverlust beobachten. Es resultiert bei dem auf der Ankopplung eines Transponders an das erzeugte Wechselfeld beruhenden Ansatz zur Transponder-Detektion eine durchschnittliche Stromaufnahme von etwa

$$I_{det} = i_{det} \times t_{det} = 70 \text{ mA} \times 2 \text{ ms / s} = \textbf{140 µA}$$

Insgesamt resultiert ein durchschnittlicher Stromverbrauch $I_{verbr}$ von etwa **151,6** µ**A**.
Geht man von einer effektiven Ladung von 1500 mAh einer typischen Lithium AA Batterie aus, so resultierte eine Batterie-Lebensdauer $T_{batt}$ von ca. 13 Monaten:

$$T_{Batt} = 1500 \text{ mAh} / 211,6 \text{ µA} = \textbf{ca. 412 Tage}$$

Gegenüber einem nicht-pollenden RFID-Leser stellt dies eine Verbesserung von etwa 2-3 Größenordnungen dar. Ein fast jährlicher Batteriewechsel ist für manche Anwendungen aber trotzdem noch wenig praktikabel oder sogar inakzeptabel, insbesondere wenn in einem Umfeld viele entsprechende RFID-Leser oder NFC-Leser vorhanden sind. Für andere Anwendungen wird ein fast jährlicher Batteriewechsel hingegen ohne weiteres akzeptabel sein, so dass die Ausführungsvariante gemäß Fig. 3 durchaus ihre Bedeutung hat.
Die vorstehende Abschätzung zeigt, dass der Stromverbrauch der Transponder-Detektion dominiert, während das gelegentliche Auslesen eines Transponders bzw. die gelegentliche Datenkommunikation mit einem Transponder geringere Bedeutung hat. Gemäß der vorstehenden, nur als Beispiel anzusehenden Abschätzung entfallen etwa 92% des Stromverbrauchs auf die Transponder-Detektion, obwohl nur ein Transponder-Detektionsversuch pro Sekunde durchgeführt wird. Weitere Nachteile des beschriebenen Polling-Ansatzes mit Transponder-Detektion über die Ankopplung eines Transponders an das erzeugte Wechselfeld sind folgende:

- Es wird ein recht hoher Detektionsstrom $I_{det}$ für ein genügend starkes Wechselfeld benötigt, damit sich Dämpfungen genügend sicher detektieren lassen.

- Die Einschwingzeit des frequenzstabilisierten Quarzes ist vergleichsweise lang, was erheblich zu einer insgesamt recht langen Detektionszeit $t_{der}$ beiträgt.

Gegenüber der Überwachungseinrichtung 200 von Fig. 3 ist dementsprechend eine andere Art der Überwachung des Umgebungsbereichs der Lese-Einheit bevorzugt, die nicht auf der Ankopplung eines Transponders an ein Wechselfeld mit Energieentnahme aus dem Wechselfeld durch den Transponder beruht.

Fig. 4 zeigt in Verbindung mit Fig. 2 eine entsprechende Ausführungsvariante, bei der anstelle der Überwachungseinrichtung 200 eine Überwachungseinrichtung 200' realisiert ist, deren Bezugszeichen in Fig. 2 in Klammern als Alternative zum Bezugszeichen 200 angegeben ist.

Die bei der Ausführungsvariante gemäß Fig. 4 realisierte Transponderdetektion beruht nicht auf der Dämpfung einer ein Wechselfeld erzeugenden elektrischen Schwingung durch einen an das Wechselfeld angekoppelten Transponder, sondern auf der Verstimmung der ein Wechselfeld erzeugenden elektrischen Schwingung in Folge einer durch das Zuführen eines Transponders in die Umgebung der Lese-Einheit hervorgerufenen elektrischen oder magnetischen oder elektromagnetischen Änderung in der Umgebung bzw. in Folge einer elektrischen oder magnetischen oder elektromagnetischen Rückwirkung des zugeführten Transponders. Die elektrische Schwingung wird durch einen frei schwingenden, nicht quarzstabilisierten Oszillator erzeugt und es kommt über das von einer Antenne oder allgemein einer Felderzeugungsanordnung erzeugte Nahfeld zu einer Wechselwirkung mit der Umgebung bzw. dem Transponder, so dass die elektrischen oder/und magnetischen oder/und elektromagnetischen Eigenschaften des Transponders und dessen Materialien und Komponenten, ggf. speziell auch ein zur Schwingung anregbarer elektrischer Schwingkreis oder/und eine Induktivität des Transponders, auf die Schwingung rückwirken und so eine Frequenzänderung der elektrischen Schwingung bewirken können.

So hängt die Induktivität etwa einer Leiterschleife von der relativen Permeabilität $\mu_r$ des vom magnetischen Fluss des magnetischen Wechselfelds durchfluteten Raumes ab. Führt man ein Material anderer relativer Permeabilität in den durchfluteten Raum zu, so resultiert aus der in Folge auftretenden Änderung der Induktivität einer Leiterschleife oder einer Spulen- oder Leiterschleifen-Anordnung die Änderung einer Resonanzfrequenz und damit Schwingfrequenz eines die Induktivität als Frequenz-beeinflussendes oder Frequenz-bestimmendes Bauteil enthaltenden Schwingkreises. In entsprechender Weise kann in einem solchen Schwingkreis eine frequenzbeeinflussende oder frequenzbestimmende Kapazität durch Änderungen elektrischer Eigenschaften der Umgebung geändert werden, was über eine Änderung der Resonanz-Frequenz eine Änderung der Schwingungsfrequenz bewirken kann. Relevant ist hierbei die Polarisierbarkeit eines vom Feld durchfluteten Dielektrikums, die typischerweise durch die relative Dielektrizitätskonstante $\varepsilon_r$ beschrieben wird. Je nach Art des für die Transponderdetektion verwendeten Wechselfelds (im Folgenden auch als Sensor-Wechselfeld bezeichnet) können die Permeabitätseigenschaften oder/und die die Dielektrizitätseigenschaften der Umgebung und eines in diese zuzuführenden, also in die Nähe der Lese- bzw. Vermittlungseinheit zubringenden Transponders relevant sein.

Ein besonders wirkungsvoller Mechanismus für die Transponderdetektion beruht demgegenüber auf einer Wechselwirkung eines Schwingkreises des Transponders oder einer Induktivität des Transponders, insbesondere einer Induktivität eines Schwingkreises des Transponders, mit dem frei schwingenden Oszillator, der mittels der Antenne bzw. Felderzeugungsanordnung das Sensor-Wechselfeld erzeugt. Zwar könnte man das Vorhandensein bzw. Nicht-Vorhandensein eines solchen Schwingkreises bzw. einer solcher Induktivität eines Transponders im Umgebungsbereich ebenfalls allgemein als elektrische bzw. magnetische bzw. elektromagnetische Eigenschaft der Umgebung bzw. des in diese zugeführten Transponders auffassen. Es tritt aber eine Wechselwirkung bzw. Rückwirkung auf den Oszillator bzw. Schwingkreis einer die Transponderdetektion durchführenden Überwachungseinrichtung in der Art einer Wechselwirkung zwischen gekoppelten Oszillatoren (Schwingkreisen) bzw. gekoppelten Induktivitäten auf, die einen besonders starken Effekt in Bezug auf die dem Sensor-Wechselfeld zugrunde liegenden elektrische Schwingung ergibt und so wirkungsvoll für die Transponderdetektion ausgenutzt werden kann. Insbesondere lässt sich so auch eine besonders hohe Selektivität für das Ansprechen der Überwachungseinrichtung auf einen zugeführten Transponder erreichen.

Auf Grundlage der angesprochenen Mechanismen führt die Präsenz eines RFID-basierten Transponders im Nahfeld einer Antennenanordnung, die durch einen frei schwingenden Oszillator angeregt wird, zu einer signifikanten Frequenzänderung des Oszillators. Die Frequenzänderung ist insbesondere dann besonders groß und einfach zu detektieren, wenn die Schwingfrequenz des Oszillators ungefähr resonant zu einem Schwingkreis des Transponders ist, da dann in dem Schwingkreis des Transponders eine elektrische Schwingung angeregt wird, die auf den Schwingkreis der Lese-Einheit rückwirkt und ebenfalls die Schwingfrequenz des frei schwingenden Oszillators beeinflusst.

Gemäß diesem, im Rahmen der Realisierung der Erfindung besonders bevorzugten Ansatz, ergeben sich u.a. die folgenden relevanten Vorteile:

a) Die langen Anschwingzeiten eines Quarzes entfallen, da ein frei schwingender, also nicht quarzstabilisierter Oszillator zum Einsatz kommt. Beispielsweise kann ein Colpitts-Oszillator eingesetzt werden, der nur eine vernachlässigbar kurze Einschwingzeit benötigt, woraus eine sehr kleine Detektionszeit $t_{det}$ resultiert.

b) Es kann mit erheblich niedrigeren abzustrahlenden Leistungen bzw. Feldstärken des Wechselfelds gearbeitet werden, da es bereits in schwachen Feldern im Falle der Präsenz eines Transponders zu signifikanten Verstimmungen der Schwingfrequenz kommt. Dies führt zu einem deutlich verkleinerten Detektionsstrom $i_{det}$.

c) Auf Grundlage der stark reduzierten Detektionszeit $t_{det}$ und des deutlich verkleinerten Detektionsstroms $i_{det}$ resultiert insgesamt eine sehr starke Reduzierung des Energiebedarfs $E_{det}$ bzw. Strombedarfs $I_{det}$ für die Transponderdetektion.

d) Frequenzverstimmungen, also Frequenzdifferenzen, lassen sich erheblich sicherer und mit deutlich verringertem Aufwand als Laständerungen erfassen, indem beispielsweise einfache digitale Zähler eingesetzt werden.

Nach dem der Ausführungsvariante der Fig. 4 zugrunde liegenden Ansatz wird eine die Antennenanordnung 102 als frequenzbestimmendes oder frequenzbeeinflussendes Element enthaltende Oszillator-Schaltung verwendet, beispielsweise eine kapazitive oder induktive Dreipunktschaltung. Besonders zweckmäßig im hier behandelten Kontext ist eine kapazitive Dreipunktschaltung, die bei der Überwachungseinrichtung 200' der Fig. 4 als sog. Colpitts-Oszillator realisiert ist. Es handelt sich um einen kapazitiv rückgekoppelten Dreipunkt-LC-Oszillator mit Parallelschwingkreis, der im Falle der Fig. 4 als Emitter-Schaltung realisiert ist. Eine solche Schaltung kann mit einfachen Mitteln aufgebaut werden und arbeitet sehr zuverlässig.

Der für einen Schwingungsfrequenzbereich bei beispielsweise 13,56 MHz geeignete Transistor 250 empfängt an seinem von dem Kollektor und der Basis gebildeten Eingang das Schwingungs-Rückkopplungssignal von der PCB-Antenne 102, wenn die Schalter 210 und 212 in Folge eines Pegels 1 vom Ausgang A_det des Prozessors 108 in der die PCB-Antenne der Überwachungseinrichtung 200' zuschaltenden Schaltstellung sind. Das Pegelsignal 1 vom Ausgang A_det ist hinsichtlich Spannung und von einer Treiberschaltung des Prozessors 108 ziehbarem Strom so bemessen, dass es als Versorgungsspannung für den Colpitts-Oszillator 252 reicht, der über eine Drossel 256 die Versorgungsspannung am Kollektor bezogen auf die über einen Widerstand 254 zur Stabilisierung des Transistor-Arbeitspunkts am Emitter angelegte Masse empfängt. Der Arbeitspunkt ist über einen Spannungsteiler mit Widerständen 256, 258 bestimmt, die die an der Basis angelegte Arbeitspunkts-Vorspannung bestimmen.

Die Emitterschaltung erzeugt eine Phasendrehung von 180°. Um das Rückkopplungssignal phasengleich dem Eingang zuzuführen und eine selbsttätig startende und sich selbsttätig erhaltende Schwingung zu erreichen, ist eine zusätzliche Phasendrehung von nochmals 180° erforderlich. Diese wird durch den kapazitiven Dreipunkt bestehend aus zwei Kapazitäten 260, 262 und einer Induktivität 264 der PCB-Antenne 102 erreicht. Ein Abgreifpunkt zwischen den beiden Kapazitäten ist auf Masse gelegt, so dass über die gemeinsame Masse eine Verbindung zum Emitter hergestellt ist.

Die Induktivität 264 bildet zusammen mit der Reihenschaltung der Kapazitäten 260, 262 einen Parallel-Schwingkreis, der den frequenzbestimmenden Schwingkreis des Colpitts-Oszillators 252 darstellt. Das Verhältnis der Kapazitäten 260, 262 bestimmt einen Koppelfaktor. Die bereits angesprochenen Kondensatoren 206, 208 trennen den Schwingkreis galvanisch von dem Transistor. Der zum Stabilisierungswiderstand 254 parallel geschaltete Kondensator 266 hebt für das Oszillatorsignal die Gegenkopplung auf, da er für die elektrische Schwingung den Widerstand 254 durch seinen geringen kapazitiven Widerstand überbrückt. Der Kondensator 268 schafft eine kapazitive Verbindung der Betriebsspannung zum gemeinsamen Massepotential, was für eine einwandfreie Funktion der Oszillatorschaltung zweckmäßig ist.

Ist die Überwachungseinrichtung 200' im Überwachungs-Betriebszustand der Lese-Einheit 100 (ggf. Vermittlungseinheit 100) aktiviert, so schwingt der Colpitts-Oszillator 252. Die elektrische Schwingung erzeugt durch die PCB-Antenne 102 ein auch als Sensor-Wechselfeld bezeichnetes Wechsel-Nahfeld, welches sich in einen Umgebungsbereich (Nahfeldbereich) erstreckt und über die elektrischen bzw. magnetischen bzw. elektromagnetischen Eigenschaften des Umgebungsbereichs auf den Colpitts-Oszillator zurückwirkt und dessen Schwingfrequenz beeinflusst. Die momentane Schwingfrequenz wird durch Zuführung eines die elektrische Schwingung repräsentierenden Spannungssignals über eine Pegelanpassung 218 an einen Zählereingang E_z des Prozessors 108 erfasst. Der Zähler des Prozessors 108 und die Zählerstände auswertende Prozessorfunktionalitäten sind in einer funktionellen Betrachtung als der Überwachungseinrichtung 200' zugehörig anzusehen.

Ein schon angesprochener Mechanismus für die Überwachung des Umgebungsbereichs auf Vorhandensein bzw. Zufuhr eines Transponders beruht darauf, dass die Materialien und Komponenten des Transponders über ihre, insbesondere durch die relative Permeabilitätskonstante bzw. relative Dielektrizitätskonstante beschreibbaren elektrischen und magnetischen und elektromagnetischen Eigenschaften die insgesamt vom erzeugten Wechselfeld "gesehenen" elektrischen bzw. magnetischen bzw. elektromagnetischen Eigenschaften des Umgebungsbereichs beeinflussen und über eine Änderung insbesondere der wirksamen Induktivität des Schwingkreises dessen Resonanzfrequenz beeinflussen und gegenüber einem Zustand ohne Transponder im Umgebungsbereich verschieben.

Ein anderer schon angesprochener Mechanismus, der in einer grundlegenden Betrachtung aber zumindest teilweise ebenfalls auf derartige effektive Änderungen der magnetischen bzw. elektrischen bzw. elektromagnetischen Eigenschaften zurückführbar sein dürfte, ist die Wechselwirkung des die Antenne 102 bildenden Schwingkreises mit einem entsprechenden Schwingkreis eines jeweiligen Transponders. Ist die Resonanzfrequenz des Oszillators 252 ungefähr resonant zum Schwingkreis des Transponders (ggf. eine RFID-Karte), so tritt eine signifikante Frequenzänderung der Schwingfrequenz des Oszillators der Überwachungseinrichtung 200' auf, die einfach detektierbar ist.

In diesem Zusammenhang sei noch angemerkt, dass die Resonanzfrequenz des Schwingkreises des Transponders von den elektrischen (insbesondere dielektrischen) und magnetischen Eigenschaften der Materialien des Transponders selbst abhängt, so dass insoweit vermittels der Wechselwirkung zwischen dem Schwingkreis des Transponders und dem Schwingkreis der Überwachungseinrichtung 200' die Zufuhr eines Transponders in den Umgebungsbereich zu einer auf die Überwachungseinrichtung 200' wirkenden Änderung der elektrischen bzw. magnetischen bzw. elektromagnetischen Eigenschaften des Umgebungsbereichs führt.

Eine jeweils auftretende Frequenzverschiebung des frei schwingenden Oszillators 252 der Überwachungseinrichtung 200' wird bevorzugt auf Grundlage wenigstens einer Überwachungsbedingung und wenigstens einer Referenz-Schwingfrequenz oder/und wenigstens einer Schwellen-Differenzfrequenz ausgewertet, um zu entscheiden, ob die detektierte Frequenzverschiebung auf das Vorhandensein eines Transponders im Umgebungsbereich hinweist oder nicht. Neben der Größe der Frequenzverschiebung (Differenzfrequenz gegenüber einem Zustand zuvor) ist auch die Richtung der Frequenzverschiebung, zu größeren oder zu kleineren Frequenzen, relevant. Entsprechende Referenz- und Schwellenwerte und entsprechende Überwachungsbedingungen können empirisch unter Verwendung eines jeweiligen Transponders ermittelt werden, insbesondere auch nach Platzierung der Lese-Einheit an einer bestimmten Stelle eingelernt werden, da auch die sonstige Umgebung, insbesondere die Materialien von Komponenten und Halterungen der Lese-Einheit, eine Rolle spielen, sowie auch die an der jeweiligen Stelle herrschende Temperatur. Vorteilhaft kann die Überwachungseinrichtung in einem Kalibriermodus der Lese-Einheit selbsttätig kalibriert werden. Es können auch selbsttätig wiederholt auftretende Kalibrierungen vorgesehen sein. Referenzwert kann vorteilhaft ein Vergangenheitswert sein, beispielsweise ein Mittelwert einer definierten Vorperiode, ggf. - um auch auftretende Temperaturänderungen berücksichtigen zu können - etwa ein Mittelwert der letzten fünf Minuten, um ein Beispiel zu geben.

Wird eine Frequenzverschiebung des frei schwingenden Oszillators 152 der Überwachungseinrichtung der Überwachungseinrichtung 200' detektiert, die auf das Vorhandensein eines Transponders im Umgebungsbereich hinweist, aktiviert dann der Prozessor 108 die Luftschnittstelle 102, 105 bzw. 102, 104, 106, schaltet also in einen Kopplungs-Betriebszustand der Lese-Einheit 100 um, in dem die Datenkommunikation zwischen dem Transponder und der Lese-Einheit erfolgen kann, ggf. nach einer vorangehenden Überprüfung mittels der Luftschnittstelle 102,105 bzw. 102, 104, 106, ob überhaupt ein Transponder im Nahfeldbereich vorhanden ist, mit dem kommuniziert werden kann. Eine solche Überprüfung könnte über die Detektion einer Dämpfung des Wechselfelds erfolgen oder dadurch, dass an den Transponder insbesondere durch eine Lastmodulation des Wechselfeldes ein Signal gesendet wird, sich als kommunikationsbereit zu melden. Ein Transponder könnte auch so ausgeführt oder programmiert sein, dass er nach Detektion eines Wechselfeldes bzw. - im Falle eines passiven Transponders - nach Einsetzen der Bestromung des Transponders aus dem Wechselfeld ein Signal sendet (insbesondere durch Lastmodulation des Wechselfelds), das seine Präsenz anzeigt.

Bevorzugt ist ein Polling mittels der Überwachungseinrichtung 200' realisiert, bei dem der Mikroprozessor 108 den Oszillator durch sein vom Ausgang A_det ausgegebenes Steuer- und Versorgungssignal ein- und ausschaltet und an seinem Eingang E_z die Frequenz des rückgeführten Spannungssignals zählt, während der Oszillator aktiv ist. Die Umschalter 210, 212 schalten die Antenne entweder zum Oszillator zur Transponder-Detektion oder zum Transceiver 105, insbesondere RFID- bzw. NFC-Transceiver, zur Kommunikation mit dem erkannten Transponder, wobei die Umschalter gemäß der in Fig. 4 realisierten Lösung ebenfalls durch das Signal vom Ausgang A_det gesteuert werden können. Anstelle der Umschalter können auch PIN-Dioden oder HF-Analog-Umschalter eingesetzt werden.

Im "Schlafmodus", also dem Ruhe-Betriebszustand sind bevorzugt alle Komponenten bis auf einen sehr energiearmen "Watchdog/Timer" in einem Modus verschwindenden oder sehr geringen Energieverbrauchs. Bei dem "Watchdog" kann es sich um einen internen "Watchdog" des Prozessors handeln.

Der "Watchdog" weckt den Prozessor (ggf. Mikrocontroller) regelmäßig zur Transponder-Detektion auf. Zuerst wird der Colpitt-Oszillator 252 aktiviert und hierzu über A_det bestromt. Nach wenigen hunderten Nanosekunden kann der Prozessor bereits anfangen, die Anzahl der Pulse am Eingang E_z für eine vordefinierte Zeit, z.B. 200 $\mu$s, zu zählen für die Frequenzmessung. Dann kann der Oszillator ausgeschaltet werden und der aktuelle Zählerwert mit einem Referenzwert verglichen werden, um festzustellen, ob sich ein Transponder in der Nähe befindet. Im Falle einer erfolgreichen Detektion eines Transponders wird durch Ausgabe des Pegels 0 am Ausgang A_det die Antenne 102 zum Transceiver 105 umgeschaltet und zugleich mittels eines Pegels 1 am Ausgang Trsc.-Enable des Prozessors 108 aktiviert. Nach Durchführung der Datenkommunikation wird der Transceiver 105 wieder deaktiviert und die Antenne dem Oszillator zugeschaltet.

In einer Abschätzung kann man annehmen, dass der Prozessor 108, die Umschalter 210, 212 und der Oszillator 252 insgesamt einen Strom von etwa 15 mA während der Transponder-Detektion beziehen. Der hieraus resultierende Energieverbrauch, ausgedrückt als Stromverbrauch, ist dementsprechend etwa wie folgt:

$$I_{det} = 15\ \text{mA} \times 0{,}20\ \text{ms/s} = \mathbf{3{,}00\ \mu A}$$

$$I_{ges} = 3{,}00\ \mu A + 11{,}6\ \mu A = \mathbf{14{,}60\ \mu A}$$

Gegenüber dem ober erläuterten Ansatz der Transponder-Detektion über den Energieverlust eines von einer Luftschnittstelle erzeugten Wechselfelds, an welche der Transponder koppelt, ist der Stromverbrauch für die Transponder-Detektion etwa um einen Faktor 46 reduziert, und bezogen auf den Gesamt-Stromverbrauch, einschließlich dem Stromverbrauch beim Lesen entsprechend den obigen Annahmen, ergibt sich eine Reduzierung etwa um den Faktor 10. Auf Basis eines solchen Stromverbrauchs wird für die angenommene Lithium AA Batterie eine Lebensdauer $T_{Batt}$ von etwa 142 Monaten, bzw. etwa **12 Jahren** erreicht.

Ein weiterer Vorteil des der Ausführungsvariante der Fig. 4 zugrunde liegenden Ansatzes liegt darin, dass, je nach Dimensionierung des Oszillators, eine sehr hohe Empfindlichkeit für die Transponder-Detektion erzielt werden kann. Es können in der Praxis unterschiedliche Frequenzänderungen von ein paar % bis zu 100%, nämlich dass die Schwingung des Oszillators zum Erliegen kommt, bei verschiedenen Dimensionierungen des Oszillators beobachtet werden, wenn sich ein RFID-Transponder, insbesondere eine Standard-RFID-Mifare-Karte, bis auf eine Distanz von ca. 4 cm der Lese-Einheit nähert.

Gegenüber herkömmlichen, nicht-pollenden RFID-Lesern wird eine Reduzierung des Stromverbrauchs um etwa 3-4 Größenordnungen erreicht, so dass ein entsprechendes Lese-Gerät, insbesondere RFID- bzw. NFC-Leser, ohne jegliche Probleme und ohne Bedarf für Batteriewechsel über sehr lange Zeiten batteriebetrieben eingesetzt werden kann.

Angemerkt sei, dass man aufgrund der sehr energiesparsamen Transponder-Detektion auch ohne weiteres vorsehen kann, dass die Überwachungseinrichtung 200' öfter als bei den vorangehenden Annahmen, beispielsweise zwei bis drei Mal pro Sekunde, aktiviert wird, um zuverlässig auch nur auf sehr kurz in den Umgebungsbereich der Lese-Einiheit zugeführte Transponder ansprechen zu können und die Datenkommunikation mit diesen starten zu können.

Angemerkt sei ferner, dass eine erfindungsgemäße Überwachungseinrichtung, etwa die Überwachungsschaltung 200' oder alternativ die Überwachungsschaltung 200, in einen RFID/NFC-Leser-Modul, insbesondere Transceiver-Chip, direkt integriert sein könnte, ohne die Kosten für ein solches Bauteil nennenswert zu erhöhen.

Noch einmal Bezug nehmend auf das Schließsystem der Fig. 1 und 2 wird daran gedacht, dass die Vermittlungseinheit 100 in einem Programmier-Betriebsmodus mittels des Prozessors 108 über die Luftschnittstelle 110, 112 der Vermittlungseinheit 100 und die Luftschnittstelle 17, 18 der Schließeinheit 12 die Programmierung des Prozessors 14 oder/und die Eingabe von Schließ- und Identifizierungs- und Berechtigungsdaten in den Speicherbereich 16 des Prozessors 14 ermöglicht. Hierzu kann die Vermittlungseinheit 100 über die Luftschnittstelle 102, 104, 106 entsprechend angesteuert werden, etwa durch einen eine komplementäre Luftschnittstelle aufweisenden transportablen Computer. Besonders vorteilhaft ist hierbei, wenn der Transceiver 106 ein NFC-Transceiver ist, der für einen solchen Programmiermodus in einen Client-Modus oder einen Peer-to-Peer-Modus schaltbar ist, um mittels einem entsprechenden, als Master dienenden oder ebenfalls im Peer-to-Peer-Modus betriebenen Transceiver des tragbaren Computers zusammen zu wirken.

Mit einer als Vermittlungseinheit ausgeführten, die verschiedenen Erfindungsvorschläge realisierenden Lese-Einheit kann vorteilhaft und ohne nennenswerten Installationsaufwand ein Schließsystem, wie mit den oben angegebenen Produkten der Anmelderin bereitgestellt, dafür tauglich gemacht werden, mit Identmedien in Form von passiven NFC/RFID-Transpondern etwa in Kartenform zusammen zu wirken, die direkt mit der Schließeinheit etwa eines digitalen Schließzylinders nicht kommunizieren und von dieser auch nicht mit Energie versorgt werden können. Parallel können aktive Transponder und Identmedien entsprechend den angesprochenen Produkten der Anmelderin verwendet werden. Die Bedienungsfunktionalität hinsichtlich der Verwendung des NFC/RFID-Transponders in Bezug auf das Entsperren der Schließeinheit des Schließsystems entspricht der Bedienungsfunktionalität des Transponders in Bezug auf übliche NFC/RFID-Lese-Geräte. Es muss nur der Transponder in den Nahbereich der Lese-Einheit gehalten werden, worauf dann im Falle einer positiven Feststellung der Identität bzw. der Berechtigung in Folge des Zusammenwirkens mit der Schließeinheit über die Vermittlungseinheit die Schließeinheit den Zugang durch die Tür durch entsprechende Entriegelung bzw. Freigabe einer Entriegelung freigibt. Man kann in diesem Zusammenhang vorsehen, dass für einen definierten Zeitraum ab positiver Identitätsfeststellung bzw. Berechtigungsfeststellung ein Entriegelungszustand bzw. Zustand der Freigabe der Entriegelung eingenommen wird, der einem Zeitraum entspricht, die ein Benutzer dafür braucht, nach Zufuhr des Transponders in die Nähe der Vermittlungseinheit die Tür tatsächlich zu öffnen.

Auf Basis der Erfindungs- und Weiterbildungsvorschläge ist insbesondere auch eine Erweiterung eines schon bestehenden Schließsystems um die Verwendbarkeit von passiven RFID/NFC-Identmedien möglich, da batteriebetriebene Vermittlungseinheiten zum Einsatz kommen können, die ohne jeden elektrischen Installationsaufwand in Zuordnung zu einer jeweiligen Schließeinheit positioniert werden können, je nach Anwendungssituation auf einer oder beiden Seiten einer Tür oder dergleichen.

**Patentansprüche**

1.  Lese-Einheit (100), etwa RFID- oder NFC-Lese-Einheit (100), umfassend:

    - wenigstens eine Luftschnittstelle (102, 104, 106; 102, 105), die dafür ausgeführt ist, in wenigstens einem Kopplungs-Betriebszustand der Lese-Einheit wenigstens eines von einem elektrischen Wechselfeld und einem magnetischen Wechselfeld und einem elektromagnetischen Strahlungs-Wechselfeld zu erzeugen, um induktiv oder/und kapazitiv oder/und elektromagnetisch an einen in einem Zuordnungsbereich befindlichen Transponder (50), ggf. RFID- oder NFC-Transponder (50), koppeln zu können;
    - eine Steuereinrichtung (108), die dafür ausgeführt oder programmiert ist, in dem Kopplungs-Betriebszustand mittels der Luftschnittstelle auf einen angekoppelten Transponder (50) anzusprechen, zur Durchführung einer Datenkommunikation umfassend zumindest eines von einem Auslesen wenigstens eines Datenwerts aus dem Transponder und einem Empfangen wenigstens eines vom Transponder gesendeten Datenwerts und einem Senden wenigstens eines Datenwerts an den Transponder; und
    - eine die Steuereinrichtung und die Luftschnittstelle mit elektrischer Betriebsenergie versorgende elektrische Energieversorgung (120);

    wobei in wenigstens einem Ruhe-Betriebszustand der Lese-Einheit (100) zumindest die Luftschnittstelle (102, 104, 106; 102, 105) ausgeschaltet ist, so dass der elektrische Energieverbrauch der Luftschnittstelle zumindest reduziert ist;
    wobei eine der Steuereinrichtung (108) zugeordnete oder zugehörige Überwachungseinrichtung (200') dafür ausgeführt ist, auf wenigstens eine Rückwirkung aus dem Umgebuhgsbereich anzusprechen, wobei die Steuereinrichtung (108) dafür ausgeführt oder programmiert ist, auf ein Ansprechen der Überwachungseinrichtung (200') auf die Rückwirkung mit einer Umschaltung aus dem Ruhe-Betriebszustand in den Kopplungs-Betriebszustand zu reagieren, um mittels der Luftschnittsstelle (102, 104, 106; 102, 105) die Datenkommunikation aufzunehmen,
    wobei die Überwachungseinrichtung (200') dafür ausgeführt ist, wenigstens eines von einem sich in den Überwachungsbereich erstreckenden elektrischen Sensor-Wechselfeld und magnetischen Sensor-Wechselfeld und elektromagnetischen Sensor-Wechselfeld zu erzeugen und wenigstens eine auf Basis des Sensor-Wechselfelds von der Rückwirkung aus dem Umgebungsbereich abhängende Sensor-Größe zu erfassen und mit wenigstens einer vorgegebenen oder vorgebbaren Referenz-Größe auf Basis wenigstens einer vorgegebenen Überwachungsbedingung zu vergleichen,
    **dadurch gekennzeichnet,**
    **dass** die Überwachungseinrichtung einen Oszillator (252) aufweist, der zu einer der Erzeugung des Sensor-Wechselfelds zugrunde liegenden freien elektrischen Schwingung anregbar ist, derart, dass eine momentane Schwingfrequenz von der Rückwirkung aus dem Umgebungsbereich abhängt, wobei die momentane Schwingfrequenz oder eine diese wiederspiegelnde Erfassungsgröße oder eine von der Schwingfrequenz bzw. Erfassungsgröße abhängige Folgegröße als Sensor-Größe erfassbar ist, und
    **dass** die Überwachungseinrichtung dafür ausgeführt ist, auf einen im Umgebungsbereich befindlichen Schwingkreis oder/und auf eine im Umgebungsbereich befindliche Induktivität anzusprechen, der bzw. die auf Basis des Sensor-Wechselfelds mit einem zum Oszillator gehörenden Schwingkreis (102) oder/und einer zum Oszillator gehörenden Induktivität (264) wechselwirkt und so auf die Schwingfrequenz rückwirkt.

2.  Lese-Einheit nach Anspruch 1, **dadurch gekennzeichnet, dass** die Steuereinrichtung (108) dafür ausgeführt oder programmiert ist, selbsttätig aus dem Ruhe-Betriebszustand direkt in den Kopplungs-Betriebszustand oder aus dem Ruhe-Betriebszustand über einen gesonderten Überwachungs-Betriebszustand der Lese-Einheit (100) in den Kopplungs-Betriebszustand umzuschalten oder/und dass die Steuereinrichtung (108) dafür ausgeführt oder programmiert ist, selbsttätig aus dem Kopplungs-Betriebszustand in den Ruhe-Betriebszustand umzuschalten.

3.  Lese-Einheit nach Anspruch 2, **dadurch gekennzeichnet, dass** die Steuereinrichtung (108) dafür ausgeführt ist, in zeitlichen Abständen wiederholt aus dem Ruhe-Betriebszustand in den Kopplungs-Betriebszustand oder einen speziellen Überwachungs-Kopplungs-Betriebszustand der Lese-Einheit (100) umzuschalten, um mittels der oder einer Luftschnittstelle (200, 102; 102, 202, 204) zu überprüfen, ob ein Transponder (50) im Zuordnungsbereich vorhanden ist.

**4.** Lese-Einheit nach Anspruch 3, **dadurch gekennzeichnet, dass** die der Steuereinrichtung (108) zugeordnete oder zugehörige, gewünschtenfalls eine eigene Überwachungs-Luftschnittstelle (102, 202, 204) vorsehende Überwachungseinrichtung (200) dafür ausgeführt ist, im Überwachungs-Kopplungsbetriebszustand auf einen Energieverlust des Wechselfelds oder eines von der Überwachungs-Luftschnittstelle erzeugten Überwachungs-Wechselfelds durch den angekoppelten Transponder (50) anzusprechen, um das Vorhandensein eines Transponders in dem Zuordnungsbereich oder in einem Umgebungsbereich, in welchen sich das Überwachungs-Wechselfeld erstreckt, festzustellen.

**5.** Lese-Einheit nach einem der Ansprüche 1 bis 4, **dadurch gekennzeichnet, dass** die Überwachungseinrichtung (200') von der Luftschnittstelle (102, 104, 106; 102, 105) vorzugsweise unabhängig ist.

**6.** Lese-Einheit nach Anspruch 5, **dadurch gekennzeichnet, dass** in einem/dem Überwachungs-Betriebszustand der Lese-Einheit

    a) die Überwachungseinrichtung (200') aktiv ist oder in zeitlichen Abständen wiederholt aktivierbar ist, um auf das Auftreten wenigstens einer Änderung im Umgebungsbereich bzw. das Auftreten wenigstens einer Rückwirkung aus dem Umgebungsbereich ansprechen zu können, und
    b) die Luftschnittstelle (102, 104, 106; 102, 105) oder zumindest wenigstens eine elektrische Energie verbrauchende Komponente der Luftschnittstelle ausgeschaltet ist, so dass der elektrische Energieverbrauch der Luftschnittstelle zumindest reduziert ist;

wobei die Steuereinrichtung (108) dafür ausgeführt oder programmiert ist, selbsttätig aus dem Überwachungs-Betriebszustand in den Kopplungs-Betriebszustand umzuschalten, wenn die Überwachungseinrichtung (200') auf eine Änderung im Umgebungsbereich bzw. auf eine Rückwirkung aus dem Umgebungsbereich anspricht.

**7.** Lese-Einheit nach einem der vorhergehenden Ansprüche, **dadurch gekennzeichnet, dass** die Überwachungseinrichtung (200') dafür ausgeführt oder programmiert ist, eine jeweils erfasste Sensor-Größe oder erfasste Sensor-Größen mit wenigstens einer vorgegebenen oder wenigstens einer aus wenigstens einer zuvor erfassten Sensor-Größe vorgebbaren Referenzgröße auf Basis wenigstens einer vorgegebenen Überwachungsbedingung zu vergleichen und in Abhängigkeit von der Erfüllung bzw. Nicht-Erfüllung der Überwachungsbedingung auf die Rückwirkung aus dem Umgebungsbereich anzusprechen oder nicht anzusprechen.

**8.** Lese-Einheit nach Anspruch 7, **dadurch gekennzeichnet, dass** die Überwachungseinrichtung (200') einen auf die elektrische Schwingung ansprechenden Zähler aufweist, wobei momentane Zählerstände oder hieraus ermittelte Folgegrößen oder auf Grundlage des Erreichens eines jeweiligen Trigger-Zählerstands bestimmte Größen als Sensor-Größen erfassbar sind.

**9.** Lese-Einheit nach einem der Ansprüche 7 bis 8, **dadurch gekennzeichnet, dass** wenigstens eine Felderzeugungsanordnung, ggf. Antennenanordnung (102), vorgesehen ist, die als Überwachungs-Felderzeugungsanordnung, ggf. Überwachungs-Antennenanordnung, der Überwachungseinrichtung (200') zugeordnet oder zuordenbar ist für die Erzeugung des Sensor-Wechselfelds.

**10.** Lese-Einheit nach Anspruch 9, **dadurch gekennzeichnet, dass** die der Überwachungseinrichtung (200') zugeordnete Überwachungs-Felderzeugungsanordnung (102) als frequenzbestimmender oder frequenzbeeinflussender Bestandteil des Oszillators (252) dient.

**11.** Lese-Einheit nach Anspruch 10, **dadurch gekennzeichnet, dass** der Oszillator eine Verstärker-Baugruppe (250) umfasst, dessen Ausgang über die Überwachungs-Felderzeugungsanordnung (102) im Sinne einer Mitkopplung zu einem Eingang der Verstärker-Baugruppe zurückgekoppelt oder rückkoppelbar ist.

**12.** Lese-Einheit nach Anspruch 11, **dadurch gekennzeichnet, dass** die Verstärker-Baugruppe zusammen mit der Überwachungs-Felderzeugungsanordnung eine kapazitive oder induktive Dreipunkt-Oszillatorschaltung, vorzugsweise eine Collpits-Oszillatorschaltung (252), bildet.

**13.** Lese-Einheit nach einem der vorhergehenden Ansprüche, **dadurch gekennzeichnet, dass** die elektrische Energieversorgung (120) der Lese-Einheit (100) eine Batterie- oder Akkumulator-Energieversorgung ist.

**14.** Verfahren zur Steuerung eines Systems bei der Aufnahme einer drahtlosen Datenübertragung zwischen einer ersten

# EP 1 973 055 B1

Komponente (100) in Form einer Lese-Einheit (100) nach einem der Ansprüche 1 bis 13, und einer zweiten tragbaren Komponente (50) in Form eines Transponders, etwa eines RFID- oder NFC-Transponder (50), wobei das Verfahren die Aktivierung wenigstens einer Luftschnittstelle (102, 104, 106; 102, 105) für die drahtlose Datenübertragung umfasst;

wobei die erste Komponente (100) einen Umgebungsbereich kontinuierlich oder - vorzugsweise - in zeitlichen Abständen wiederholt auf das Auftreten wenigstens einer vordefinierten Rückwirkung aus dem Umgebungsbereich überwacht, und dann, wenn eine solche Rückwirkung auftritt, die Luftschnittstelle (102, 104, 106; 102, 105) für die drahtlose Datenübertragung sowie für die Energieversorgung der zweiten Komponente (50) über die Luftschnittstelle aktiviert, wobei die vordefinierte Rückwirkung **dadurch** hervorgerufen wird, dass die zweite Komponente (50) in den Umgebungsbereich zugeführt wird,

wobei von der ersten Komponente (100) wenigstens eines von einem sich in den Überwachungsbereich erstreckenden elektrischen Sensor-Wechselfeld und magnetischen Sensor-Wechselfeld und elektromagnetischen Sensor-Wechselfeld erzeugt wird und wenigstens eine auf Basis des Sensor-Wechselfelds von der Rückwirkung aus dem Umgebungsbereich abhängende Sensor-Größe erfasst und mit wenigstens einer vorgegebenen oder vorgebbaren Referenz-Größe auf Basis wenigstens einer vorgegebenen Überwachungsbedingung verglichen wird,

**dadurch gekennzeichnet, dass** ein Oszillator (252) zu einer der Erzeugung des Sensor-Wechselfelds zugrunde liegenden freien elektrischen Schwingung angeregt wird, derart, dass eine momentane Schwingfrequenz von der Rückwirkung aus dem Umgebungsbereich abhängt, wobei die momentane Schwingfrequenz oder eine diese wiederspiegelnde Erfassungsgröße oder eine von der Schwingfrequenz bzw. Erfassungsgröße abhängige Folgegröße als Sensor-Größe erfasst wird, und

dass die erste Komponente (100) auf einen im Umgebungsbereich befindlichen Schwingkreis oder/und auf eine im Umgebungsbereich befindliche Induktivität anspricht, der bzw. die auf Basis des Sensor-Wechselfelds mit einem zum Oszillator gehörenden Schwingkreis (102) oder/und einer zum Oszillator gehörenden Induktivität (264) wechselwirkt und so auf die Schwingfrequenz rückwirkt.

## Claims

1. Read unit (100), for example RFID or NFC read unit (100), comprising:

   - at least one interface (102, 104, 106; 102, 105), which is configured to produce, in at least one coupling operating state of the read unit, at least one of an electric alternating field and a magnetic alternating field and an electromagnetic radiation alternating field in order to be able to couple inductively or/and capacitively or/and electromagnetically to a transponder (50) located in an allocation region, optionally an RFID or NFC transponder (50);
   - a control device (108), which is configured or programmed to respond in the coupling operating state by means of the air interface, to a coupled transponder (50), to carry out a data communication comprising at least one of a reading of at least one data value from the transponder and a receiving of at least one data value sent from the transponder and a sending of at least one data value to the transponder; and
   - an electric energy supply (120) supplying the control device and the wireless interface with electric operating energy;

   wherein in at least one idle operating state of the read unit (100), at least the wireless interface (102, 104, 106; 102, 105) is switched off, so the electric energy consumption of the wireless interface is at least reduced; wherein a monitoring device (200') allocated to or associated with the control device (108) is configured to respond to at least one feedback from the surrounding region, the control device (108) being configured or programmed to react to a response of the monitoring device (200') to the feedback with a switch from the idle operating state into the coupling operating state to receive the data communication by means of the wireless interface (102, 104, 106; 102, 105), the monitoring device (200') being configured to produce at least one of an electric sensor alternating field extending into the monitoring region and a magnetic sensor alternating field and an electromagnetic sensor alternating field, and to detect at least one sensor variable depending on the feedback from the surrounding region on the basis of the sensor alternating field and to compare it with at least one predetermined or predeterminable reference variable on the basis of at least one predetermined monitoring condition, **characterised in that** the monitoring device has an oscillator (252), which can be excited to a free electric oscillation on which the production of the sensor alternating field is based, in such a way that an instantaneous oscillation frequency depends on the feedback from the surrounding region, the instantaneous oscillation frequency or a detection variable reflecting this or a following variable depending on the oscillation frequency or detection variable being detectable as a sensor variable, and **in that** the monitoring device is configured to respond to an oscillating circuit located in the surrounding region or/and to an inductor located in the surrounding region, which interacts on the basis of the sensor alternating field with an oscillating circuit (102) belonging to the oscillator or/and an inductor (264) belonging to the oscillator and thus feeds back to the oscillation frequency.

2. Read unit according to claim 1, **characterised in that** the control device (108) is configured or programmed to automatically switch from the idle operating state directly into the coupling operating state or from the idle operating state via a separate monitoring operating state of the read unit (100) into the coupling operating state and/or **in that** the control device (108) is configured or programmed to automatically switch from the coupling operating state into the idle operating state.

3. Read unit according to claim 2, **characterised in that** the control device (108) is configured to repeatedly switch at time intervals from the idle operating state into the coupling operating state or a special monitoring coupling operating state of the read unit (100), in order to check by means of the or a wireless interface (200, 102; 102, 202, 204) whether a transponder (50) is present in the allocation region.

4. Read unit according to claim 3, **characterised in that** the monitoring device (200) allocated or associated with the control device (108) and if desired, providing its own monitoring wireless interface (102, 202, 204) is configured, in the monitoring coupling operating state, to respond to an energy loss of the alternating field or a monitoring alternating field produced by the monitoring wireless interface by the coupled transponder (50) in order to determine the presence of a transponder in the allocation region or in a surrounding region, into which the monitoring alternating field extends.

5. Read unit according to any one of claims 1 to 4, **characterised in that** the monitoring device (200') is preferably independent of the wireless interface (102, 104, 106; 102, 105).

6. Read unit according to claim 5, **characterised in that** in a/the monitoring operating state of the read unit

   a) the monitoring device (200') is active or can be repeatedly activated at time intervals, in order to be able to respond to the occurrence of at least one change in the surrounding region or the occurrence of at least one feedback from the surrounding region, and
   b) the wireless interface (102, 104, 106; 102, 105) or at least a component of the wireless interface consuming electric energy is switched off, so that the electric energy consumption of the wireless interface is at least reduced;

   wherein the control device (108) is configured or programmed to automatically switch from the monitoring operating state into the coupling operating state when the monitoring device (200') responds to a change in the surrounding region or to a feedback from the surrounding region.

7. Read unit according to any one of the preceding claims, **characterised in that** the monitoring device (200') is configured or programmed to compare a respectively detected sensor variable or detected sensor variables with at least one predetermined reference variable or at least a reference variable that can be predetermined from at least one previously detected sensor variable on the basis of at least one predetermined monitoring condition, and to respond or not respond to the feedback from the surrounding region as a function of the fulfilment or non-fulfilment of the monitoring condition.

8. Read unit according to claim 7, **characterised in that** the monitoring device (200') has a counter responding to the electric oscillation, instantaneous counter readings or following variables determined therefrom or variables determined on the basis of reaching a respective trigger counter reading being detectable as sensor variables.

9. Read unit according to either of claims 7 or 8, **characterised in that** at least one field production arrangement, optionally antenna arrangement (102) is provided, which is allocated or can be allocated as a monitoring field production arrangement, optionally monitoring antenna arrangement, to the monitoring device (200') to produce the sensor alternating field.

10. Read unit according to claim 9, **characterised in that** the monitoring field production arrangement (102) allocated to the monitoring device (200') is used as a frequency-determining or frequency-influencing component of the oscillator (252).

11. Read unit according to claim 10, **characterised in that** the oscillator comprises an amplifier assembly (250), the output of which is looped back or can be looped back via the monitoring field production arrangement (102) for the purpose of positive feedback to an input of the amplifier assembly.

12. Read unit according to claim 11, **characterised in that** the amplifier assembly, together with the monitoring field production arrangement, forms a capacitive or inductive three-point oscillator circuit, preferably a Collpits oscillator circuit (252).

13. Read unit according to any one of the preceding claims, **characterised in that** the electric energy supply (120) of the read unit (100) is a battery or accumulator energy supply.

14. Method for controlling a system when receiving a wireless data transmission between a first component (100) in the form of a read unit (100) according to any one of claims 1 to 13, and a second portable component (50) in the form of a transponder, for example an RFID or NFC transponder (50), wherein the method comprises the activation of at least one wireless interface (102, 104, 106; 102, 105) for the wireless data transmission; wherein the first component (100) repeatedly monitors a surrounding region, continuously or - preferably - at time intervals for the occurrence of at least one predefined feedback from the surrounding region, and then, if a feedback of this type occurs, activates the interface (102, 104, 106; 102, 105) for the wireless data transmission and for the energy supply of the second component (50) via the wireless interface, the predefined feedback being caused in that the second component (50) is brought into the surrounding region, wherein, by the first component, at least one of an electric sensor alternating field extending into the monitoring region and a magnetic sensor alternating field and an electromagnetic sensor alternating field is produced and at least one sensor variable depending on the feedback from the surrounding region on the basis of the sensor alternating field is detected and is compared with at least one predetermined or predeterminable reference variable based on at least one predetermined monitoring condition, **characterised in that** an oscillator (252) is excited to a free electric oscillation on which the production of the sensor alternating field is based, in such a way that an instantaneous oscillation frequency depends on the feedback from the surrounding region, the instantaneous oscillation frequency or a detection variable reflecting this or a following variable depending on the oscillation frequency or detection variable being detected as the sensor variable, and **in that** the first component (100) responds to an oscillating circuit located in the surrounding region or/and to an inductor located in the surrounding region, which, on the basis of the sensor alternating field, interacts with an oscillating circuit (102) belonging to the oscillator or/and an inductor (264) belonging to the oscillator and thus feeds back to the oscillation frequency.

## Revendications

1. Unité de lecture (100), par exemple une unité de lecture RFID ou NFC (100), comprenant :

- au moins une interface aérienne (102, 104, 106 ; 102, 105) qui est réalisée pour générer, dans au moins un état opérationnel de couplage de l'unité de lecture, au moins l'un d'un champ alternatif électrique et d'un champ alternatif magnétique et d'un champ alternatif de rayonnement électromagnétique, afin de pouvoir être couplée de façon inductive et/ou capacitive et/ou électromagnétique à un transpondeur (50) situé dans une zone d'attribution, éventuellement à un transpondeur RFID ou NFC (50) ;
- un dispositif de commande (108) qui est réalisé ou programmé pour répondre, à l'état opérationnel de couplage, à un transpondeur (50) couplé au moyen de l'interface aérienne, afin de réaliser une communication de données, comprenant au moins l'une de la lecture d'au moins une valeur de données à partir du transpondeur et de la réception d'au moins valeur de données envoyée par le transpondeur et de l'envoi d'au moins une valeur de données au transpondeur ; et
- une alimentation en énergie électrique (120) alimentant le dispositif de commande et l'interface aérienne en énergie opérationnelle électrique ;

dans laquelle, dans au moins un état opérationnel de repos de l'unité de lecture (100), au moins l'interface aérienne (102, 104, 106 ; 102, 105) est désactivée, de sorte que la consommation en énergie électrique de l'interface aérienne est au moins réduite ; dans laquelle un dispositif de surveillance (200') attribuée ou associée au dispositif de commande (108) est réalisé pour répondre à au moins une rétroaction provenant de la zone environnante, dans laquelle le dispositif de commande (108) est réalisé ou programmé pour réagir suite à une réponse du dispositif de surveillance (200') à la rétroaction par une commutation de l'état opérationnel de repos à l'état opérationnel de couplage afin d'entamer la communication de données au moyen de l'interface aérienne (102, 104, 106 ; 102, 105), dans laquelle le dispositif de surveillance (200') est réalisé pour générer au moins l'un d'un champ alternatif de capteur électrique s'étendant dans la zone de surveillance et d'un champ alternatif de capteur magnétique et d'un champ alternatif de capteur électromagnétique et pour détecter au moins une grandeur de capteur dépendante de la rétroaction provenant de la zone environnante sur la base du champ alternatif de capteur, et pour la comparer à au moins une grandeur de référence prédéfinie ou prédéfinissable sur la base d'au moins une condition de surveillance prédéfinie,

**caractérisée en ce que** le dispositif de surveillance présente un oscillateur (252) qui peut être excité pour une oscillation électrique libre à la base de la génération du champ alternatif de capteur, de telle sorte qu'une fréquence d'oscillation instantanée dépend de la rétroaction provenant de la zone environnante, dans laquelle la fréquence d'oscillation instantanée ou une grandeur de détection qui la reflète ou bien une grandeur dépendante qui dépend de la fréquence d'oscillation ou de la grandeur de détection peut être détectée comme une grandeur de capteur, et **en ce que** le dispositif de surveillance est réalisé pour répondre à un circuit oscillant se trouvant dans la zone environnante et/ou à une inductance se trouvant dans la zone environnante qui interagit sur la base du champ alternatif de capteur avec un circuit oscillant (102) appartenant à l'oscillateur et/ ou avec une inductance (264) appartenant à l'oscillateur, et rétroagit ainsi sur la fréquence d'oscillation.

2. Unité de lecture selon la revendication 1, **caractérisée en ce que** le dispositif de commande (108) est réalisé ou programmé pour commuter automatiquement de l'état opérationnel de repos directement à l'état opérationnel de couplage ou bien de l'état opérationnel de repos, en passant par un état opérationnel de surveillance séparé de l'unité de lecture (100), à l'état opérationnel de couplage et/ou **en ce que** le dispositif de commande (108) est réalisé ou programmé pour commuter automatiquement de l'état opérationnel de couplage à l'état opérationnel de repos.

3. Unité de lecture selon la revendication 2, **caractérisée en ce que** le dispositif de commande (108) est réalisé pour commuter de façon répétitive à certains intervalles de temps de l'état opérationnel de repos à l'état opérationnel de couplage ou à un état opérationnel de couplage de surveillance spécial de l'unité de lecture (100) afin de vérifier au moyen d'une ou de ladite interface aérienne (200, 102 ; 102, 202, 204) s'il existe un transpondeur (50) dans la zone d'attribution.

4. Unité de lecture selon la revendication 3, **caractérisée en ce que** le dispositif de surveillance (200), attribué ou associé au dispositif de commande (108) et éventuellement muni de sa propre interface aérienne de surveillance (102, 202, 204), est réalisé pour répondre à l'état opérationnel de couplage de surveillance à une perte d'énergie du champ alternatif ou d'un champ alternatif de surveillance généré par l'interface aérienne de surveillance à travers le transpondeur couplé (50) afin de détecter la présence d'un transpondeur dans la zone d'attribution ou dans une zone environnante dans laquelle s'étend le champ alternatif de surveillance.

5. Unité de lecture selon l'une quelconque des revendications 1 à 4, **caractérisée en ce que** le dispositif de surveillance (200') est de préférence indépendant de l'interface aérienne (102, 104, 106 ; 102, 105).

6. Unité de lecture selon la revendication 5, **caractérisée en ce que** dans un/ ledit état opérationnel de surveillance de l'unité de lecture

a) le dispositif de surveillance (200') est actif ou peut être activé de façon répétitive à certains intervalles de temps afin de pouvoir répondre à l'apparition d'au moins une modification dans la zone environnante ou à l'apparition d'au moins une rétroaction provenant de la zone environnante, et
b) l'interface aérienne (102, 104, 106 ; 102, 105), ou du moins un composant consommant de l'énergie électrique de l'interface aérienne, est désactivé(e) de sorte que la consommation d'énergie électrique de l'interface aérienne est au moins réduite ;

dans laquelle le dispositif de commande (108) est réalisé ou programmé pour commuter automatiquement de l'état opérationnel de surveillance à l'état opérationnel de couplage lorsque le dispositif de surveillance (200') répond à une modification dans la zone environnante ou à une rétroaction provenant de la zone environnante.

7. Unité de lecture selon l'une quelconque des revendications précédentes, **caractérisée en ce que** le dispositif de surveillance (200') est réalisé ou programmé pour comparer une grandeur de capteur respectivement détectée ou des grandeurs de capteur respectivement détectées à au moins une grandeur de référence prédéfinie ou à au moins une grandeur de référence prédéfinissable à partir d'une grandeur de capteur détectée au préalable sur la base d'au moins une condition de surveillance prédéfinie, et pour répondre ou non, en fonction du fait que la condition de surveillance est satisfaite ou non à la rétroaction provenant de la zone environnante.

**8.** Unité de lecture selon la revendication 7, **caractérisée en ce que** le dispositif de surveillance (200') présente un compteur répondant à l'oscillation électrique, dans laquelle des positions de compteur instantanées ou des grandeurs dépendantes déterminées à partir de celles-ci ou bien des certaines grandeurs déterminées sur la base du fait qu'une position de compteur de déclenchement respective a été atteinte peuvent être détectées comme des grandeurs de capteur.

**9.** Unité de lecture selon l'une quelconque des revendications 7 et 8, **caractérisée en ce qu'**au moins un agencement de génération de champ, éventuellement un réseau d'antennes (102), est prévu qui est attribué ou peut être attribué comme un agencement de génération de champ de surveillance, éventuellement comme un réseau d'antennes de surveillance, au dispositif de surveillance (200') pour la génération du champ alternatif de capteur.

**10.** Unité de lecture selon la revendication 9, **caractérisée en ce que** le dispositif de génération de champ de surveillance (102) attribué au dispositif de surveillance (200') sert comme un composant déterminant ou influençant la fréquence de l'oscillateur (252).

**11.** Unité de lecture selon la revendication 10, **caractérisée en ce que** l'oscillateur comprend un sous-ensemble d'amplification (250) dont la sortie est réinjectée ou peut être réinjectée par l'intermédiaire de l'agencement de génération de champ de surveillance (102) en termes de couplage positif à une entrée du sous-ensemble d'amplification.

**12.** Unité de lecture selon la revendication 11, **caractérisée en ce que** le sous-ensemble d'amplification forme en conjonction avec l'agencement de génération de champ de surveillance un circuit oscillateur à trois contacts, capacitif ou inductif, de préférence un circuit oscillateur Colpitts (252).

**13.** Unité de lecture selon l'une quelconque des revendications précédentes, **caractérisée en ce que** l'alimentation en énergie électrique (120) de l'unité de lecture (100) est une alimentation en énergie à batterie ou à accumulateur.

**14.** Procédé de commande d'un système lors de l'enregistrement d'une transmission de données sans fil entre un premier composant (100) sous la forme d'une unité de lecture (100) selon l'une quelconque des revendications 1 à 13, et un deuxième composant portable (50) sous la forme d'un transpondeur, par exemple d'un transpondeur RFID ou NFC (50), dans lequel le procédé comprend l'activation d'au moins une interface aérienne (102, 104, 106 ; 102, 105) pour la transmission de données sans fil ;
dans lequel le premier composant (100) surveille une zone environnante en continu ou - de préférence - de façon répétitive à certains intervalles de temps quant à l'apparition d'au moins une rétroaction prédéfinie provenant de la zone environnante, et ensuite, lorsqu'une telle rétroaction apparaît, active l'interface aérienne (102, 104, 106 ; 102, 105) pour la transmission de données sans fil ainsi que pour l'alimentation en énergie du deuxième composant (50) par l'intermédiaire de l'interface aérienne, dans lequel la rétroaction prédéfinie est provoquée par le fait que le deuxième composant (50) est amené dans la zone environnante,
dans lequel le premier composant (100) génère au moins l'un d'un champ alternatif de capteur électrique s'étendant dans la zone de surveillance et d'un champ alternatif de capteur magnétique et d'un champ alternatif de capteur électromagnétique, et détecte au moins une grandeur de capteur dépendant de la rétroaction provenant de la zone environnante sur la base du champ alternatif de capteur et la compare à au moins une grandeur de référence prédéfinie ou prédéfinissable sur la base d'au moins une condition de surveillance prédéfinie,
**caractérisé en ce qu'**un oscillateur (252) est excité pour une oscillation électrique libre, à la base de la génération du champ alternatif de capteur, de telle sorte qu'une fréquence d'oscillation instantanée dépend de la rétroaction provenant de la zone environnante, dans lequel la fréquence d'oscillation instantanée ou une grandeur de détection qui la reflète ou une grandeur dépendante qui dépend de la fréquence d'oscillation ou de la grandeur de détection est détectée comme une grandeur de capteur, et
**en ce que** le premier composant (100) répond à un circuit oscillant se trouvant dans la zone environnante et/ou à une inductance se trouvant dans la zone environnante qui interagit sur la base du champ alternatif de capteur avec un circuit oscillant (102) appartenant à l'oscillateur et/ou avec une inductance (264) appartenant à l'oscillateur et rétroagit ainsi sur la fréquence d'oscillation.

Fig. 1

Fig. 2

EP 1 973 055 B1

Fig. 3

| A_det | E_z | Trsc.-Enable | Modi |
|-------|---------|--------------|-----------------|
| '0' | inaktiv | '0' | Schlaf |
| '1' | aktiv | '0' | Kartendetektion |
| '0' | inaktiv | '1' | Kommunikation |

Fig. 4

EP 1 973 055 B1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 6150948 A
- EP 0744843 B1
- DE 19519450 A1
- EP 1585268 A2
- DE 10341370 A1
- WO 2005027055 A1
- EP 1253559 A2
- DE 202006006859 U1
- EP 1643457 A1
- DE 10240396 A1
- DE 20306923 U1
- DE 10614215
- DE 202006859 U1

### In der Beschreibung aufgeführte Nicht-Patentliteratur

- **KLAUS FINKENZELLER.** RFID-Handbuch - Grundlagen und praktische Anwendungen induktiver Funkanlagen, Transponder und kontaktloser Chipkarten. Karl Hanser Verlag, 2006